(19) Europäisches Patentamt
European Patent Office
Office européen des brevets

(11) **EP 2 472 282 B1**

(12) **EUROPÄISCHE PATENTSCHRIFT**

(45) Veröffentlichungstag und Bekanntmachung des Hinweises auf die Patenterteilung:
**06.07.2016 Patentblatt 2016/27**

(51) Int Cl.:
*G01S 3/80* *(2006.01)*      *G01S 3/803* *(2006.01)*

(21) Anmeldenummer: **11195236.2**

(22) Anmeldetag: **22.12.2011**

(54) **Verfahren zum Bestimmem einer oder mehrerer relativer Richtungen als Zielpeilung oder Zielpeilungen sowie Vorrichtung zur Ausführung des Verfahrens**

Method for determining one or more relative directions as target bearing or target bearings and device for performing the method

Procédé de détermination d'une ou plusieurs directions relatives comme relèvement de cible ou relèvements de cible ainsi que dispositif d'exécution du procédé

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.12.2010 DE 102010056526**

(43) Veröffentlichungstag der Anmeldung:
**04.07.2012 Patentblatt 2012/27**

(73) Patentinhaber: **ATLAS ELEKTRONIK GmbH 28309 Bremen (DE)**

(72) Erfinder:
• **Beckefeld, Frank Dipl.-Ing.
27321 Emtinghausen (DE)**
• **Renken, Klaus Dipl.-Ing.
28857 Syke (DE)**

(56) Entgegenhaltungen:
**EP-A1- 0 213 418      DE-A1- 3 531 230
DE-A1- 3 832 678      DE-A1- 4 130 699
DE-A1- 19 525 877**

**Beschreibung**

Die Erfindung betrifft ein Verfahren zum Bestimmen einer oder mehrerer relativer Richtungen als Zielpeilung oder Zielpeilungen nach dem Oberbegriff von Anspruch 1 sowie eine Vorrichtung zur Bestimmung einer oder mehrerer relativer Richtungen als Zielpeilung oder Zielpeilungen nach dem Oberbegriff von Anspruch 15.

Gemäß dem Stand der Technik bewegen sich Unterwasserfahrzeuge oder Unterwasserlaufkörper entweder durch Fernsteuerung oder durch eine automatische Zielsteuerung durch das Wasser. Im Falle einer automatischen Zielsteuerung muss das Unterwasserfahrzeug oder der Unterwasserlaufkörper autark eine Aufklärung der Umgebung durchführen und dabei die relative Richtung bzw. die relativen Richtungen potentieller Ziele, z.B. bemannter oder unbemannter Oberflächenschiffe oder weiterer bemannter oder unbemannter Unterwasserfahrzeuge, erkennen bzw. detektieren. Die relativen Richtungen zum Unterwasserfahrzeug oder Unterwasserlaufkörper mit potentiellen Zielen werden dann als Zielpeilungen bestimmt. Aus den bestimmten Zielpeilungen der potentiellen Ziele wird dann in einer Lenkeinheit eine der bestimmten Zielpeilungen ausgewählt und als relative Richtung für die Zielsteuerung festgelegt.

Zur Zielpeilung von potentiellen Zielen wird hierzu in der Regel eine Sonaranlage eingesetzt, da potentielle Ziele die Eigenschaft haben, dass sie Schallwellen in das Wasser abstrahlen und diese abgestrahlten Schallwellen von einer Sonaranlage erkannt werden können. Die von einem Ziel abgestrahlten Schallwellen werden z.B. durch Generator- und Antriebsaggregate des Ziels oder durch eine sich drehende Schiffsschraube und die dabei entstehenden und wieder in sich zusammenfallenden sog. Kavitationsblasen an den Schraubenblättern der Schiffsschraube erzeugt.

Gemäß dem Stand der Technik werden die von einem potentiellen Ziel in das Wasser abgestrahlten an einer Sonaranlage einfallenden Schallwellen zur Zielpeilung von der Sonaranlage eines Unterwasserfahrzeugs oder Unterwasserlaufkörpers empfangen und die relative Richtung der einfallenden Schallwellen zum Unterwasserfahrzeug mit der Signalverarbeitungseinrichtung der Sonaranlage ermittelt.

DE 35 31 230 A1 zeigt ein Verfahren zur Detektion von Fahrzeugen. Zur Detektion werden mit einer Sonaranlage Empfangssignale aufgenommen und die Hüllkurve bzw. die Einhüllende dieser Empfangssignale bestimmt. Der zeitliche Verlauf der Einhüllenden wird dann mit einer schnellen Fourier-Transformation in den Spektralbereich transformiert. Die daraus erhaltenen Spektrallinien werden dann einer Schwellenwertschaltung zugeführt und die Spektrallinien, die unter einem Schwellenwert liegen, herausgefiltert. Alle Spektrallinien, die oberhalb des Schwellenwerts liegen, werden mit einer Anzeigeeinheit angezeigt und entsprechen dann detektierten Fahrzeugen.

Ferner wird offenbart, dass mit einer Panorama-Sonar-Anlage in einem Richtungsbildner Richtcharakteristiksignale aus einer Vielzahl von Empfangssignalen erzeugt werden. Diese Richtcharakteristiksignale werden wie zuvor die Empfangssignale verarbeitet, nämlich deren Einhüllende bestimmt, die Einhüllende spektral transformiert und die spektral transformierte Einhüllende, nämlich die Spektrallinien, in einer Schwellenschaltung derart gefiltert, dass nur Spektrallinien, die oberhalb einer Detektionsschwelle liegen, auf einer Anzeigeeinheit dargestellt werden.

DE 41 30 699 A1 zeigt ein Verfahren zur Bestimmung des Peilwinkels von Empfangssignalen eines mehrkanaligen Peilempfängers sowie eine Anordnung zur Bestimmung des Peilwinkels von Empfangssignalen. Dazu werden die Empfangssignale mittels Fourier-Transformation in den Spektralbereich transformiert und für jedes Teilband des Frequenzbereichs der Spektren wird mit einem Peilwinkelrechner ein Peilwinkel der Frequenz eines Teilbandes bestimmt. Damit nur Frequenzen, die sich vom Umgebungsrauschen abheben, im Peilwinkelrechner verarbeitet werden, werden die Frequenzen vor der Verarbeitung mittels einer einstellbaren bzw. wählbaren Schwelle gefiltert. Demnach werden gemäß einem Ausführungsbeispiel bei der Peilrichtungsberechnung nur Frequenzen berücksichtigt, die die wählbare Schwelle überschreiten.

In DE 38 32 678 wird eine Sonaranlage beschrieben, die die in das Wasser abgestrahlten Schallwellen potentieller Ziele mit einer Empfängeranordnung einer Sonaranlage empfängt. Aus den empfangenen Schallwellen werden in der Empfängeranordnung Empfangssignale und aus den Empfangssignalen Richtungssignale jeweils einer relativen Richtung zum Unterwasserfahrzeug berechnet. Jedes Richtungssignal weist somit die elektrischen Informationen der aus einer relativen Richtung zur Empfängeranordnung empfangenen Schallwellen auf. Zur weiteren Verarbeitung werden aus jedem Richtungssignal einer relativen Richtung Frequenzspektren und deren Amplitudenspektren ermittelt. Jede der in den Amplitudenspektren der Frequenzspektren auftretenden Frequenzlinien ist somit eindeutig einer der relativen Richtungen zuzuordnen, wobei eine relative Richtung mit im Amplitudenspektrum auftretenden Frequenzlinien als Zielpeilung erkannt wird.

Im Stand der Technik ergibt sich daher das Problem, dass jedes Objekt, das Schallwellen abstrahlt, ein potentielles Ziel darstellt. Es werden also auch solche relativen Richtungen als Zielpeilung bestimmt, aus denen durch Objekte, die zur Täuschung dienen, Schall abgestrahlt wird. Diese Objekte, z.B. sog. Täuschkörper oder Störer, strahlen ebenso wie potentielle Ziele Schallwellen in das Wasser ab, die von der Empfängeranordnung der Sonaranlage eines Unterwasserfahrzeugs empfangen werden.

Ferner treten durch hohe Eigengeschwindigkeiten, schnelle Kurvenfahrten und/oder die eigene Formgebung eines Unterwasserfahrzeugs Laufgeräusche und/oder erhöhtes Umgebungsrauschen im Wasser auf, das ebenfalls die Zielpeilung beeinträchtigt und zur Bestimmung von relativen Richtungen, in denen kein potentielles Ziel liegt, als Zielpeilungen führen kann.

Der Erfindung liegt das Problem zugrunde, eine relative Richtung bzw. mehrere relative Richtungen als Zielpeilung bzw. Zielpeilungen zu bestimmen, aus der bzw. aus denen sich in das Wasser abgestrahlte Schallwellen eines potentiellen Ziels bzw. mehrerer potentieller Ziele ausbreiten. Ferner sollen relative Richtungen, aus denen Schallwellen von Störgeräuschen empfangen werden, nicht als Zielpeilung erkannt werden.

Die Erfindung löst dieses Problem durch die Merkmale eines Verfahrens zum Bestimmen einer oder mehrerer relativer Richtungen als Zielpeilung oder Zielpeilungen gemäß Anspruch 1 sowie durch die Merkmale einer Vorrichtung zur Bestimmung einer oder mehrerer relativer Richtungen als Zielpeilung oder Zielpeilungen gemäß Anspruch 15.

Das erfindungsgemäße Verfahren sowie die erfindungsgemäße Vorrichtung sind derart ausgelegt, dass die von einem Täuschkörper und/oder anderen Störquellen abgestrahlten Schallwellen von den abgestrahlten Schallwellen eines potentiellen Ziels unterschieden werden können. Der Erfindung liegt die Erkenntnis zugrunde, dass die abgestrahlten Schallwellen eines potentiellen Ziels breitbandiger sind als die Schallwellen eines Täuschkörpers oder anderer Störquellen.

Dazu betrifft die Erfindung ein Verfahren zum Bestimmen einer oder mehrerer relativer Richtungen als Zielpeilung oder Zielpeilungen, wobei Schallwellen mit einer Empfängeranordnung, z.B. einer Sonaranlage, empfangen werden. Die Empfängeranordnung besteht aus mehreren, z.B. elektro- und oder optoakustischen Empfängern, die in vorbestimmter Weise, etwa an einem Unterwasserfahrzeug oder einem Unterwasserlaufkörper, angeordnet sind. Aus den Schallwellen werden mit den Empfängern der Empfängeranordnung Empfangssignale ermittelt. D.h. die Empfänger wandeln die auf die Empfängeranordnung einfallenden Schallwellen in Empfangssignale um, wobei diese Empfangssignale vorzugsweise elektrische und/oder optische Empfangssignale sind. Aus den Empfangssignalen werden Richtungssignale ermittelt, wobei jedes der Richtungssignale einer relativen Richtung zur Empfängeranordnung zugeordnet wird.

Relative Richtungen entsprechen Winkelbereichen jeweils eines Teilbereichs des Gesamtwinkels der Empfängeranordnung, aus dem Schallwellen empfangen werden können. Jeder Winkelbereich weist dazu einen oder mehrere verschieden große Winkel auf. Hierbei bezeichnet die Größe des Winkels den z.B. im Uhrzeigersinn gesehenen Abstand zu einem festgelegten "Nullwinkel". Die relative Richtung wird also von der Empfängeranordnung aus betrachtet, wobei die eintreffenden Schallwellen aus den Winkelbereichen jeweils als Richtungssignal einer relativen Richtung dargestellt werden. Die Richtungssignale werden durch sogenanntes "Beamforming" ermittelt. Hierbei werden, zur Berechnung eines der Richtungssignale einer bestimmten relativen Richtung zur Empfängeranordnung, die Empfangssignale unter Beachtung der Anordnung der Empfänger z.B. zeitverzögert miteinander addiert. Ferner ist auch ein "Beamforming" möglich, bei dem die Richtungssignale aus den bzgl. ihrer Phase verschobenen und dann miteinander addierten Empfangssignalen gebildet werden. Es werden also mehrere relative Richtungen zur Empfängeranordnung festgelegt und für jede der relativen Richtungen ein Richtungssignal ermittelt.

Aus jedem der Richtungssignale werden ein Frequenzspektrum und dessen Betragsspektrum, z. B. durch Fourier-Transformation, komplexe Fourier-Transformation oder schnelle Fourier-Transformation mit nachfolgender Betragsbildung, ermittelt. Ferner kann aus dem Betragsspektrum auch ein weiteres Spektrum abgeleitet werden, dass ebenfalls für das weitere Verfahren herangezogen werden kann. Ein abgeleitetes Spektrum ist z.B. ein Leistungsspektrum, das im Wesentlichen dem Quadrat des Betragsspektrums entspricht, oder ein Energiespektrum oder ein durch Anwendung mathematischer Funktionen, wie der Logarithmusfunktion, und/oder durch Addition und/oder Multiplikation mit einer jeweiligen Konstanten erhaltenes Spektrum. Jedem Betragsspektrum bzw. jedem aus dem Betragsspektrum abgeleiteten Spektrum des Richtungssignals einer der relativen Richtungen wird diese relative Richtung zugeordnet.

Zum Bestimmen einer oder mehrerer Zielpeilungen, also zum Definieren einer oder mehrerer der relativen Richtungen als Zielpeilung oder Zielpeilungen, also als Richtung, in der ein potentielles Ziel vermutet wird, wird jede der relativen Richtungen dann als Zielpeilung erkannt, wenn das Betragsspektrum oder das aus dem Betragsspektrum abgeleitete Spektrum eine vorbestimmte Anzahl von aus dem jeweiligen Betragsspektrum bzw. aus dem aus dem Betragsspektrum abgeleiteten Spektrum ermittelten Frequenzbandamplitudenwerte oberhalb eines Schwellenwerts aufweist, die oberhalb einer Detektionsanzahl liegt.

Dazu werden Frequenzbandamplitudenwerte eines Frequenzbandes eines Betragsspektrums bzw. daraus abgeleiteten Spektrums ermittelt, indem der gesamte Frequenzbereich des Betragsspektrums bzw. des aus dem Betragsspektrum abgeleiteten Spektrums, in Frequenzbänder jeweils eines Teilfrequenzbereichs aufgeteilt bzw. zerteilt wird. Daraufhin werden für jedes der Frequenzbänder die Amplitudenwerte der innerhalb des jeweiligen Frequenzbandes auftretenden Frequenzen als ein Frequenzbandamplitudenwert zusammengefasst.

D.h. es können in einem Frequenzband keine, eine oder mehrere Spektrallinien jeweils einer Frequenz mit Werten bzw. Amplitudenwerten ungleich Null auftreten. Diese Werte bzw. Amplitudenwerte werden, z. B. durch Addieren, als ein Frequenzbandamplitudenwert zusammengefasst.

Die Detektionsanzahl wird vorzugsweise abhängig von den Umständen der Einsatzart der Empfängeranordnung festgelegt. Umstände sind hierbei z.B. die Fahr- und Kurvengeschwindigkeit sowie die Formgebung eines Trägerfahrzeugs der Empfängeranordnung, z.B. eines Unterwasserfahrzeugs oder Unterwasserlaufkörpers. Die Detektionsanzahl ist jedoch vorzugsweise durch Versuche zu ermitteln. Ferner ist die Detektionsanzahl vom Frequenzbereich des Betragsspektrums bzw. des aus dem Betragsspektrum abgeleiteten Spektrums sowie der Anzahl der Frequenzbänder und deren Teilfrequenzbereich abhängig.

Der Schwellenwert ist vorzugsweise ebenfalls durch Versuche zu ermitteln, da dieser u.a. abhängig vom durch das Trägerfahrzeug der Empfängeranordnung erzeugten Umgebungsrauschen ist. Da sich das Umgebungsrauschen solcher Trägerfahrzeuge z.B. während unterschiedlicher Fahrmanöver ändert, ist es auch denkbar, dass der Schwellenwert, z.B. während des Einsatzes, angepasst wird.

Ferner betrifft die Erfindung eine Vorrichtung zur Bestimmung eines oder mehrerer relativer Richtungen als Zielpeilung oder Zielpeilungen. Die Vorrichtung ist dazu derart ausgebildet, um Schallwellen mit einer Empfängeranordnung zu empfangen und aus den empfangenen Schallwellen Empfangssignale zu ermitteln. Ferner ist die Vorrichtung derart ausgebildet, um aus den Empfangssignalen Richtungssignale jeweils einer zur Empfängeranordnung relativen Richtung zu ermitteln. In der Empfängeranordnung werden die Empfangssignale zur Ermittlung der Richtungssignale durch einen Richtungsbildner oder Beamformer z.B. zeitverzögert miteinander addiert. Außerdem ist die Vorrichtung derart ausgebildet, um aus jedem Richtungssignal ein der relativen Richtung des Richtungssignals zugeordnetes Betragsspektrum bzw. ein aus dem Betragsspektrum abgeleitetes Spektrum zu ermitteln. Zur Ermittlung des Betragsspektrums eignet sich z.B. ein Spektralbilder, der das Frequenzspektrum jeweils eines Richtungssignals berechnet und dieses einem Betragsbildner zuführt, der aus dem Frequenzspektrum das Betragsspektrum bzw. Spektrum berechnet.

Weiter ist die Vorrichtung derart ausgebildet, um jede der relativen Richtungen, die jeweils einem Betragsspektrum bzw. Spektrum zugeordnet ist, als Zielpeilung zu bestimmen, wenn das jeweilige Betragsspektrum bzw. Spektrum mindestens eine Anzahl von aus dem jeweiligem Betragsspektrum bzw. Spektrum ermittelten Frequenzbändern jeweils mit einem Frequenzbandamplitudenwert oberhalb eines festgelegten Schwellenwerts aufweist, die oberhalb einer Detektionsanzahl liegt. Die Vorrichtung ist dazu derart ausgebildet, um die Frequenzbandamplitudenwerte zu ermitteln, indem aus dem Frequenzbereich des jeweiligen Betragsspektrums bzw. Spektrums Frequenzbänder ermittelt und für jedes der Frequenzbänder die Amplitudenwerte bzw. Werte der innerhalb des jeweiligen Frequenzbandes auftretenden Frequenzen als ein Frequenzbandamplitudenwert zusammengefasst werden.

Das mit dem Spektral- und Betragsbildner erzeugte Betragsspektrum bzw. Spektrum wird zur Ermittlung bzw. zur Bestimmung der Frequenzbandamplitudenwerte des Betragsspektrums bzw. Spektrums, z.B. in einem Frequenzbandbildner, in mehrere Frequenzbänder jeweils eines Teilfrequenzbereichs aufgeteilt. Jedes Frequenzband enthält dann nur noch einen Teilfrequenzbereich des gesamten Frequenzbereichs des jeweiligen Betragsspektrums bzw. Spektrums. Aus jedem erzeugten Frequenzband wird, z.B. in einem Frequenzbandamplitudenwertbildner, ein Frequenzbandamplitudenwert der Amplitudenwerte bzw. Werte innerhalb des jeweiligen Frequenzbandes auftretenden Frequenzen gebildet. Der Frequenzbandamplitudenwert eines Frequenzbandes kann z.B. durch Addition der Amplitudenwerte bzw. Werte der innerhalb des Frequenzbandes auftretenden Frequenzen berechnet werden. Allerdings ist es ebenso möglich, den Frequenzbandamplitudenwert durch Multiplikation der Amplitudenwerte bzw. Werte der innerhalb des Frequenzbandes auftretenden Frequenzen zu berechnen. Ferner können die Frequenzbandamplitudenwerte oder auch einzelnen Amplitudenwerte bzw. Werte vor oder nach dem Zusammenfassen zusätzlich mit einem Verstärkungsfaktor addiert oder multipliziert werden, um diese an die Signalverarbeitung anzupassen.

Vorteil des erfindungsgemäßen Verfahrens sowie der erfindungsgemäßen Vorrichtung ist, dass die mit der Empfängeranordnung empfangenen Schallwellen einer relativen Richtung als Schallwellen eines Ziels oder eines Täuschkörpers bzw. anderer Störquellen bestimmt bzw. definiert werden können. Dementsprechend kann eine relative Richtung als Zielpeilung bestimmt werden. Diese Unterscheidung ist möglich, da ein potentielles Ziel Schallwellen eines größeren Frequenzbereichs abstrahlt als z.B. ein Täuschkörper. Durch Bestimmen bzw. Festlegen der Detektionsanzahl sowie der Teilfrequenzbereiche der Frequenzbänder kann eine Grenze festgelegt bzw. gewählt werden, ab welcher Bandbreite von einfallenden Schallwellen diese Schallwellen einem Störer oder einem potentiellen Ziel zugeordnet werden.

Gemäß einer vorteilhaften Weiterbildung wird im Falle, dass mehrere benachbarte relative Richtungen jeweils ein Betragsspektrum bzw. ein aus dem Betragsspektrum abgeleitetes Spektrum mit mindestens einer Anzahl von Frequenzbändern mit Frequenzbandamplitudenwerten oberhalb des Schwellenwertes aufweisen, die oberhalb der Detektionsanzahl liegt, nur die relative Richtung der benachbarten relativen Richtungen als Zielpeilung bestimmt wird, die die größte Anzahl von höchsten Frequenzbandamplitudenwerten gleicher Frequenzbänder dieser benachbarten relativen Richtungen aufweist.

Werden also mehrere relative Richtungen, die bzgl. ihrer räumlichen Lage, also ihres Winkelbereichs, als benachbart zu betrachten sind, zunächst als Zielpeilungen bestimmt, so werden die Anzahl und die Werte der Frequenzbandamplitudenwerte dieser relativen Richtungen miteinander verglichen. Durch den Vergleich wird die relative Richtung ermittelt, die die vergleichsweisen meisten Frequenzbandamplitudenwerte mit den vergleichsweise höchsten Frequenzbandamplitudenwerten aufweist. Nur die durch den Vergleich ermittelte relative Richtung wird dann als Zielpeilung bestimmt, wogegen die übrigen der benachbarten relativen Richtungen vernachlässigt werden.

Vorteil der Bestimmung nur einer relativen Richtung von mehreren benachbarten relativen Richtungen als Zielpeilung ist, dass vermutet werden kann, dass Anteile der elektrischen Signale der Schallwellen nur eines potentiellen Ziels in mehreren Richtungssignalen auftreten können. In diesem Fall werden mehrere relative Richtungen als Zielpeilungen desselben Ziels bestimmt. Da die Frequenzbandamplitudenwerte, die aus dem Richtungssignal der relativen Richtung bestimmt wurden, in der das potentielle Ziel tatsächlich liegt, jedoch am höchsten sind, kann diese relative Richtung durch den Vergleich der Frequenzbandamplitudenwerte von den relativen Richtungen unterschieden werden, in denen das potentielle Ziel gerade nicht liegt.

Gemäß einer weiteren vorteilhaften Weiterbildung können ein oder mehrere Frequenzbänder eines oder mehrerer der Betragsspektren bzw. der aus den Betragsspektren abgeleiteten Spektren ausgeblendet werden, indem die Frequenzbandamplitudenwerte der auszublendenden Frequenzbänder auf einen Wert unterhalb des festgelegten Schwellenwerts festgelegt werden. Es werden dazu z.B. ein oder mehrere Teilfrequenzbereiche festgelegt und alle Frequenzbandamplitudenwerte der Frequenzbänder, die Frequenzen dieses oder dieser Teilfrequenzbereiche aufweisen, auf einen Wert der unterhalb des festgelegten Schwellenwerts liegt, also z.B. Null, festgelegt oder festgesetzt.

Vorteil der Ausblendung bestimmter Frequenzbänder ist, dass Schallwellen mit bestimmten Frequenzen, die z.B. durch ein Aktivsonar ausgesendet und an potentiellen Zielen aber auch Störern, die in einer relativen Richtung liegen, reflektiert werden, nicht zu einer Verbreiterung des Frequenzbereichs bzw. der Bandbreite der Schallwellen führen soll, die aus dieser relativen Richtung auf die Empfängeranordnung treffen. Dieser hier entgegengewirkten Verbreiterung der Bandbreite der Schallwellen könnte ansonsten dazu führen, dass ein Täuschkörper oder Störer als ein potentielles Ziel erkannt und somit diese relative Richtung als Zielpeilung bestimmt werden würde.

Gemäß einer weiteren vorteilhaften Weiterbildung werden die Empfangssignale zum Ermitteln der Richtungssignale in eine tieferes Band frequenzumgesetzt, die frequenzumgesetzten Empfangssignale tiefpassgefiltert, die tiefpassgefilterten frequenzumgesetzten Empfangssignale digitalisiert und die digitalisierte tiefpassgefilterten frequenzumgesetzten Empfangssignale zeitversetzt miteinander addiert. Dazu werden, in z. B. parallelen Verarbeitungswegen, die Empfangssignale jeweils bzgl. ihrer Frequenzen in einen tieferen Frequenzbereich umgesetzt. Die Frequenzumsetzung kann z.B. durch Frequenzmischung erfolgen. Die frequenzumgesetzten Empfangssignale werden danach tiefpassgefiltert, um die z.B. beim Mischen entstehenden Summenmischprodukte herauszufiltern. Die tiefpassgefilterten frequenzumgesetzten Empfangssignale werden daraufhin quantisiert bzw. digitalisiert und zuletzt zeitversetzt miteinander addiert, um die Richtungssignale zu bilden.

Vorteil der Frequenzumsetzung der Empfangssignale ist, dass eine Digitalisierung aufgrund des Nyquist-Shannon-Abtasttheorems nach der Frequenzumsetzung mit einer vergleichsweise geringeren Samplingfrequenz möglich ist. Vorteil der Tiefpassfilterung ist, dass nur die wesentlichen Informationen der Empfangssignale nach der Frequenzumsetzung erhalten bleiben und somit ein geringerer Aufwand an Rechenleistung für die weitere Verarbeitung notwendig ist. Die Quantisierung bzw. Digitalisierung der tiefpassgefilterten frequenzumgesetzten Empfangssignale hat den Vorteil, dass die weitere Signalverarbeitung mit einer digitalen Signalverarbeitung durchgeführt werden kann, die geringere Rechenleistung benötigt.

Gemäß einer weiteren vorteilhaften Weiterbildung wird das Richtungssignal, zum Ermitteln eines einer relativen Richtung zugeordneten Betragsspektrums bzw. eines aus dem Betragsspektrum abgeleiten Spektrums, der jeweiligen relativen Richtung chronologisch in gleich große Zeitfenster, also mit gleicher Zeitdauer, jeweils eines Zeitbereichs eingeteilt. Hierbei gleichen jeweils die Zeitpunkte bzw. der Zeitbereich eines der Zeitfenster eines Richtungssignals den Zeitpunkten bzw. dem Zeitbereich jeweils eines der Zeitfenster jedes der anderen Richtungssignale. D.h. es werden jeweils aus der gleichen Anzahl mehrerer aufeinanderfolgender Zeitpunkte, also einem Zeitbereich, eines Richtungssignals Zeitfenster gebildet, wobei chronologische Zeitfenster zeitlich aufeinanderfolgende Zeitfenster mit jeweils unterschiedlichen Zeitpunkten bezeichnen. Ferner werden aus jedem der Richtungssignale zeitgleiche Zeitfenster der Richtungssignale aus der gleichen Anzahl zeitgleicher Zeitpunkte gebildet.

Durch Einteilen der Richtungssignale in gleiche Zeitfenster, können die einzelnen Betragsspektren bzw. abgeleiteten Spektren der Richtungssignale zu gleichen Zeitpunkten für einen endlichen Zeitbereich oder eine endliche Zeitdauer des Richtungssignals bestimmt werden, wodurch Rechenleistung eingespart wird. Außerdem ist somit eine Aufklärung der potentiellen Ziele für einen bestimmten Zeitbereich für alle relativen Richtungen gleichzeitig möglich.

Gemäß einer weiteren vorteilhaften Weiterbildung wird jedes der Zeitfenster mit einer Fensterfunktion, z.B. einem Hamming-Fenster, gefiltert bzw. gefenstert.

Vorteil der Filterung bzw. der Fensterung jedes der Zeitfenster ist, dass jedes Zeitfenster eines Richtungssignals in den Spektralbereich transformiert werden kann, ohne dass unerwünschte Frequenzen durch den sog. "Leck-Effekt" entstehen.

Gemäß einer weiteren vorteilhaften Weiterbildung werden die Betragsspektren bzw. die abgeleiteten Spektren sowie deren Frequenzbandamplitudenwerte mit einer festgelegten Wiederholfrequenz erneut aus den Zeitfenstern des gleichen jeweils aktuellen Zeitbereichs mit gleichen Zeitpunkten für jede der relativen Richtungen ermittelt. Nach Ablauf der Zeitperiode der Wiederholfrequenz werden also die Betragsspektren bzw. abgeleitete Spektren sowie die Frequenzbandamplitudenwerte der gleichen Zeitfenster der relativen Richtungen erneut berechnet, wobei nach jedem Ablauf der Zeitperiode bei der Berechnung z.B. die gleichen Zeitfenster gewählt werden, die gerade zuletzt, also aktuell, aus dem Richtungssignal ermittelt wurden.

Vorteil dieser mit einer Wiederholfrequenz aktualisierten Betragsspektren bzw. abgeleiteten Spektren sowie Frequenzbandamplitudenwerten ist, dass die sich ständig jeweils aus einer relativen Richtung in eine andere relative Richtung bewegenden potentiellen Ziele, immer der relativen Richtung zuzuordnen sind, in der sie sich aktuell befinden.

Gemäß einer weiteren vorteilhaften Weiterbildung wird eine Matrix mit Elementen, die jeweils einer Zeile und einer Spalte der Matrix zugeordnet sind, gebildet. Hierbei wird jeder Zeile eine relative Richtung und jeder Spalte der Matrix jeweils ein Frequenzband oder jeder Spalte eine relative Richtung und jeder Zeile ein Frequenzband zugeordnet. Benachbarten Frequenzbändern, also mit benachbarten Frequenzbereichen, werden benachbarten Spalten bzw. Zeilen und benachbarten relativen Richtungen, also mit benachbarten Winkelbereichen, werden benachbarten Zeilen bzw. Spalten zugeordnet. Somit ist jedem Element der Matrix eine relative Richtung und ein Frequenzband zugeordnet. In jedes Element wird nun der Frequenzbandamplitudenwert des dem Element zugeordneten Frequenzbandes der dem Element zugeordneten relativen Richtung eingetragen bzw. das jeweilige Element als dieser Frequenzbandamplitudenwert dargestellt.

Vorteil einer derartigen Matrix ist, dass eine Gesamtaufklärung der sich im Wasser befindlichen potentiellen Ziele, Täuschkörper und Störgeräusche, die Schall in das Wasser abstrahlen, möglich ist. Bei Erkennung einer Vielzahl von relativen Richtungen als Zielpeilungen, kann mit Hilfe der Matrix ein ideales Ziel bestimmt werden. Dies kann z.B. die bestimmte Zielposition mit den vergleichsweise höchsten Frequenzbandamplitudenwerten sein.

Gemäß einer weiteren vorteilhaften Weiterbildung wird aus den Frequenzbandamplitudenwerten des gleichen Frequenzbandes aller relativen Richtungen jeweils für jedes Frequenzband eine Winkelbereichsfunktion mit ersten Funktionsargumenten gebildet. Hierbei entsprechen die ersten Funktionsargumente einer Winkelbereichsfunktion den Winkelbereichen der relativen Richtungen. Es wird also jedem ersten Funktionsargument ein Winkelbereich einer relativen Richtung zugewiesen. Ferner wird den ersten Funktionsargumenten als Funktionswert jeweils der Frequenzbandamplitudenwert des Frequenzbandes, für das die Winkelfunktion gebildet wird, der relativen Richtung, die dem jeweiligen Funktionsargument zugeordneten Winkelbereich entspricht, zugeordnet.

Es wird also jeweils ein Frequenzband der Frequenzbänder betrachtet und eine Winkelbereichsfunktion für genau dieses Frequenzband gebildet. Eine Winkelbereichsfunktion besteht wie jede andere beliebige Funktion aus Funktionsargumenten, wobei jedes Funktionsargument wiederum einen Funktionswert aufweist.

Jede der Winkelbereichsfunktionen für jeweils eines der unterschiedlichen Frequenzbänder wird in den Spektralbereich transformiert und daraus jeweils durch die Transformation eine erste Spektralfunktion mit ersten Spektralfunktionsargumenten erhalten. Zwischen den mittleren Spektralfunktionsargumenten der ersten Spektralfunktionsargumente der ersten Spektralfunktion wird diese mit weiteren Spektralfunktionsargumenten aufgefüllt. Eine erste Spektralfunktion enthält also genau wie die Winkelbereichsfunktion, aus der die erste Spektralfunktion gebildet wird, Funktionsargumente, die hier als Spektralfunktionsargumente bezeichnet werden. Zwischen den mittleren Spektralfunktionsargumenten der ersten Spektralfunktionsargumente der ersten Spektralfunktion werden nun weitere Spektralfunktionsargumente eingefügt, die Funktionswerte im Bereich von Null, also z.B. Null, aufweisen. Jede der Spektralfunktionen wird nach dem Auffüllen wieder aus dem Spektralbereich rücktransformiert, wodurch sich eine erste interpolierte Winkelbereichsfunktion ergibt.

Vorteil der Bildung von Winkelbereichsfunktionen sowie Auffüllen der Winkelbereichsfunktionen im Spektralbereich ist, dass jede erste interpolierte Winkelbereichsfunktion, zusätzlich zu den ersten Funktionsargumenten der Winkelbereichsfunktion durch das Auffüllen im Spektralbereich nach dem Rücktransformieren, weitere Funktionsargumente genau zwischen den ersten Funktionsargumenten aufweist. Die Funktionswerte dieser weiteren Funktionsargumente entsprechen interpolierten Frequenzbandamplitudenwerten weiterer interpolierter relativer Richtungen. Zwischen jeweils zwei benachbarten der ersten Funktionsargumente liegen also nun ein oder mehrere weitere Funktionsargumente, wobei diese Anzahl von der Anzahl der aufgefüllten weiteren Spektralfunktionsargumente abhängig ist. Es ist also möglich, interpolierte Frequenzbandamplitudenwerte weiterer interpolierter relativer Richtungen zu bestimmen, ohne zusätzliche Richtungssignale aus den Empfangssignalen zu berechnen. Eine Auflösung, die durch Festlegung der relativen Richtungen, die als Zielpeilungen bestimmt werden können, kann somit mit geringem rechnerischem Aufwand erhöht werden.

Gemäß einer weiteren vorteilhaften Weiterbildung werden die Funktionswerte der Funktionsargumente der Winkelbereichsfunktion vor dem Transformieren in den Spektralbereich quantisiert. Die Auflösung der Werte, die von einem Funktionswert beim Quantisieren, z.B. durch Digitalisieren, angenommen werden können, ist frei wählbar und abhängig von der Geschwindigkeit einer zur Verfügung stehenden Signalverarbeitungsanlage sowie der geforderten Genauigkeit. Jede der Winkelbereichsfunktionen wird nach dem Quantisieren mit einer diskreten Fourier-Transformation in den Spektralbereich transformiert und nach dem Auffüllen mit einer inversen diskreten Fourier-Transformation aus dem Spektralbereich zurück transformiert. Da die Funktionsargumente bereits diskreten Werten, nämlich den relativen Richtungen, entsprechen und die Funktionswerte nach der Diskretisierung ebenfalls diskrete Werte annehmen, kann die diskrete Fourier-Transformation bzw. die inverse diskrete Fourier-Transformation auf die Winkelbereichsfunktion bzw. die Spektralfunktion angewendet werden.

Vorteil der diskreten Fourier-Transformation bzw. der inversen diskreten Fourier-Transformation ist, dass diese einfach auf einem Computer oder einer Rechnereinheit implementiert und durchgeführt werden kann, wobei der Computer oder die Recheneinheit hierfür gleichzeitig einen geringen Energiebedarf hat.

Gemäß einer weiteren vorteilhaften Weiterbildung wird jede der Winkelbereichsfunktionen vor der Spektraltransformation mit kleineren und größeren Funktionsargumenten aufgefüllt. Hierbei wird die jeweilige Winkelbereichsfunktion mit kleineren Funktionsargumenten, die Winkelbereich mit kleineren Winkeln als die Winkel der den ersten Funktionsargumenten entsprechenden Winkelbereiche entsprechen, unterhalb des kleinsten Funktionsarguments der ersten Funktionsargumente, das dem Winkelbereich mit den vergleichsweise kleinsten Winkeln der Winkel der den ersten Funktionsargumenten entsprechenden Winkelbereiche entspricht, aufgefüllt. Ferner wird die Winkelbereichsfunktion mit größeren Funktionsargumenten, die Winkelbereichen mit größeren Winkeln als die Winkel der den ersten Funktionsargumenten entsprechenden Winkelbereiche entspricht, oberhalb des größten Funktionsarguments der ersten Funktionsargumente, das dem Winkelbereich mit den vergleichsweise größten Winkeln der Winkel der den ersten Funktionsargumenten entsprechenden Winkelbereiche entspricht, aufgefüllt, sodass die Gesamtanzahl der Funktionsargumente einer Winkelbereichsfunktion einer Zweierpotenz entspricht.

Dazu werden zunächst die ersten Funktionsargumente einer Winkelbereichsfunktion betrachtet. Diese weisen ein erstes Funktionsargument mit den kleinsten Winkeln eines Winkelbereichs einer relativen Richtung sowie ein erstes Funktionsargument mit dem größten Winkeln eines Winkelbereichs einer relativen Richtung auf. Hier entspricht das kleinste Funktionsargument der ersten Funktionsargumente z.B. dem Funktionsargument, das dem Winkelbereich der am weitesten gegen den Uhrzeigersinn gesehen liegenden relativen Richtung, also mit den kleinsten Winkeln, entspricht. Das größte Funktionsargument der ersten Funktionsargumente entspricht dann z.B. dem Funktionsargument, das dem Winkelbereich der am weitesten im Uhrzeigersinn gesehen liegenden relativen Richtung, also mit den größten Winkeln, entspricht. Unterhalb des kleinsten Funktionsarguments der ersten Funktionsargumente werden nun weitere kleinere Funktionsargumente in jede der Winkelbereichsfunktionen eingefügt. Ebenfalls werden oberhalb des größten Funktionsarguments der ersten Funktionsargumente größere Funktionsargumente in die Winkelbereichsfunktion eingefügt. Analog beziehen sich auch hier "größer" und "kleinere" immer auf die Winkel eines Winkelbereichs der Funktionsargumente. Ein Oberhalb eines unterhalb liegenden Funktionsargumentes liegendes Funktionsargument weist hier einen Winkelbereich mit größeren Winkeln als das unterhalb liegende Funktionsargumente auf. Es werden genau so viele kleinere und größere Funktionsargumente in jede der Winkelbereichsfunktionen eingefügt, dass die Gesamtzahl der Funktionsargumente jeder der Winkelbereichsfunktionen einer zweier Potenz entspricht. Die Gesamtzahl bezeichnet hier die Anzahl der ersten Funktionsargumente zzgl. der kleineren und größeren hinzugefügten Funktionsargumente.

Vorteil des Hinzufügens von kleineren und größeren Funktionsargumenten in eine Winkelbereichsfunktion, sodass die Gesamtzahl der Funktionsargumente einer Winkelbereichsfunktion einer zweier Potenz entspricht, ist, dass die Winkelbereichsfunktion mit einer schnellen Fourier-Transformation in den Spektralbereich transformiert werden kann. Dies spart Rechenaufwand in einer Rechnereinheit oder einem Computer und ermöglicht gleichzeitig eine Berechnung mit geringerem Energiebedarf als bei einer gewöhnlichen diskreten Fourier-Transformation.

Gemäß einer weiteren vorteilhaften Weiterbildung wird der Funktionswert des kleinsten Funktionsarguments vom größten der kleineren Funktionsargumente, das dem Winkelbereich mit dem vergleichsweise kleinsten Winkeln der Winkel der den kleineren Funktionsargumenten zugeordneten Winkelbereichen entspricht, derart gewählt, dass dieses einen Wert im Bereich von Null aufweist. Entsprechend wird der Funktionswert des größten Funktionsarguments der größeren Funktionsargumente, das dem Winkelbereich mit dem vergleichsweise größten Winkeln der Winkel der den größeren Funktionsargumenten zugeordneten Winkelbereichen entspricht, derart gewählt, dass dieser einen Wert im Bereich von Null aufweist.

Vorteil der Funktionswerte mit einem Wert im Bereich von Null des größten der größeren und des kleinsten der kleineren Funktionsargumente ist, dass bei der Spektraltransformation der Winkelbereichsfunktion mit der schnellen Fourier-Transformation der sog. "Leck-Effekt" weitestgehend vermieden wird.

Gemäß einer weiteren vorteilhaften Weiterbildung wird der Steigungsverlauf der Funktionswerte der ersten Funktionsargumente durch die Funktionswerte der kleineren Funktionsargumente im Bereich des kleinsten Funktionsarguments der ersten Funktionsargumente zunächst fortgeführt. Ferner wird auch der Steigungsverlauf der Funktionswerte der ersten Funktionsargumente durch die Funktionswerte der größeren Funktionsargumente im Bereich des größten Funktionsarguments der ersten Funktionsargumente zunächst fortgeführt. Der Steigungsverlauf der Funktionswerte der ersten Funktionsargumente wird also in den Randbereichen der ersten Funktionsargumente jeweils zu den kleineren und größeren Funktionsargumenten betrachtet und jeweils durch die Funktionswerte der kleineren und größeren Funktionsargumente im jeweiligen Randbereich mit derselben jeweiligen Steigung fortgesetzt.

Vorteil der Fortsetzung der Steigung der Funktionswerte der ersten Funktionsargumente einer Winkelbereichsfunktion durch die Funktionswerte der kleineren und größeren Funktionsargumente ist, dass dies zu genaueren Funktionswerten der weiteren Funktionsargumente der ersten interpolierten Winkelbereichsfunktion führt.

Gemäß einer weiteren vorteilhaften Weiterbildung wird jeweils eine zu einer der ersten Spektralfunktionen identische zweite Spektralfunktion mit der Funktionsvariablen oder der negierten Funktionsvariablen der ersten bzw. der zweiten Spektralfunktionen multipliziert. D.h. zu jeder der ersten Spektralfunktionen wird eine zweite identische Spektralfunktion erzeugt. Diese Spektralfunktion entspricht sozusagen einer "Kopie" der ersten Spektralfunktion. Die identische Spektralfunktion wird dann mit der Funktionsvariablen oder der negierten Funktionsvariablen der ersten bzw. der zweiten Spektralfunktion multipliziert. Hierbei ist die Funktionsvariable bei den vorliegenden Spektralfunktionen der Winkelbereich multipliziert mit der imaginären Einheit "i", also $\sqrt{-1}$. Die zweite Spektralfunktion wird in gleicher Weise wie die jeweilige erste Spektralfunktion mit weiteren Spektralfunktionsargumenten ebenfalls zwischen den mittleren Spektralfunktionsarguments der ersten Spektralfunktionsargumente mit weiteren Spektralfunktionsargumenten aufgefüllt. Zuletzt wird jede der aufgefüllten zweiten Spektralfunktionen aus dem Spektralbereich zu einer zweiten interpolierten Winkelbereichsfunktion rücktransformiert. Die zweite interpolierte Winkelbereichsfunktion entspricht dabei der abgeleiteten ersten interpolierten Winkelbereichsfunktion der jeweiligen ersten Spektralfunktion.

Vorteil der Bildung einer zweiten interpolierten Winkelbereichsfunktion ist, dass die Nullstellen der zweiten interpolierten Winkelbereichsfunktion den Maxima der dazugehörigen ersten interpolierten Winkelbereichsfunktion entsprechen. Diese Maxima entsprechen Frequenzbandamplitudenwerten einer oder mehrerer relativen Richtung, die einen besonders hohen Wert aufweisen. Es können also dadurch besonders nahe bzw. laute potentielle Ziele einer relativen Richtung bestimmt werden.

Gemäß einer weiteren vorteilhaften Weiterbildung wird jede der interpolierten Winkelbereichsfunktionen durch lineare Interpolation mit zusätzlichen weiteren Funktionsargumenten mit interpolierten Funktionswerten aufgefüllt. Es werden also zwischen die ersten Funktionsargumente bzw. die ersten und weiteren Funktionsargumente zusätzliche weitere Funktionsargumente eingefügt, die einen interpolierten Funktionswert aufweisen, der jeweils z.B. dem Mittelwert der dem zusätzlichem weiteren Funktionsargument benachbarten ersten bzw. weiteren Funktionsargumenten entspricht.

Vorteil der linearen Interpolation ist, dass mit geringer Rechenleistung die Auflösung des Gesamtwinkelbereichs in noch feiner aufgelöste Winkelbereiche erfolgen kann.

Weitere vorteilhafte Ausführungsformen ergeben sich aus den Unteransprüchen sowie aus den anhand der beigefügten Zeichnung näher erläuterten Ausführungsbeispielen. In der Zeichnung zeigen:

Fig. 1      eine Vorrichtung gemäß einem Ausführungsbeispiel der Erfindung zur Durchführung eines Ausführungsbeispiels des erfindungsgemäßen Verfahrens;

Fig. 2      eine genauere Darstellung eines Richtungsbildners der Vorrichtung aus Fig. 1;

Fig. 3      eine genauere Darstellung eines Spektralbildners der Vorrichtung aus Fig. 1;

Fig. 4a     ein digitalisiertes Richtungssignal einer relativen Richtung;

Fig. 4b     ein Zeitfenster des Richtungssignals aus Fig. 4a nach Filterung mit einem Hamming-Fenster;

Fig. 5      ein Betragsspektrum bzw. ein aus dem Betragsspektrum abgeleitetes Spektrum eines Zeitfensters eines Richtungssignals;

Fig. 6      das in Frequenzbänder eingeteilte Frequenzspektrum aus Fig. 5;

Fig. 7      die Frequenzbänder aus Fig. 6 jeweils mit aus den Amplituden der Frequenzen eines Frequenzbandes zusammengefassten Frequenzbandamplitudenwerten;

Fig. 8      eine Matrix zur Darstellung der Frequenzbandamplitudenwerte;

Fig. 9      eine genauere Darstellung eines Panoramainterpolators der Vorrichtung aus Fig. 1;

Fig. 10     eine Winkelbereichsfunktion eines Teilfrequenzbereichs eines Frequenzbandes;

Fig. 11     die Winkelbereichsfunktion aus Fig. 10, wobei im Bereich des kleinsten und größten der ersten Funktionsargumente die Steigung der ersten Funktionsargumente durch die kleinere und größere Funktionsargumente fortgeführt wird;

Fig. 12    eine Betragsfunktion einer ersten Spektralfunktion;

Fig. 13    die in Fig. 12 dargestellte Betragsfunktion der ersten Spektralfunktion mit aufgefüllten weiteren Spektralfunktionsargumenten;

Fig. 14a    eine erste interpolierte Winkelbereichsfunktion und

Fig. 14b    eine ausgeschnittene erste interpolierte Winkelbereichsfunktion.

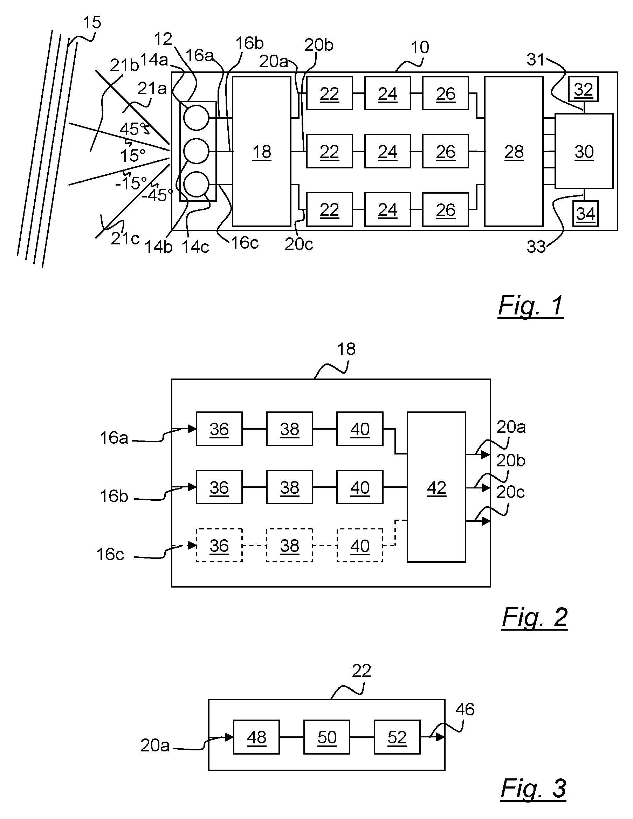

Fig. 1 zeigt eine Peilvorrichtung 10 einer Sonaranlage mit einer Empfängeranordnung 12 bestehend aus mehreren Empfängern 14a bis 14c zum Empfangen einfallender Schallwellen 15. Die Empfänger 14a bis 14c sind z.B. elektroakustische und/oder optoakustische Empfänger und/oder Wandler. Aus den empfangenen Schallwellen werden in der Empfängeranordnung 12 mit den Empfängern 14a bis 14c Empfangssignale 16a bis 16c erzeugt und einem Richtungsbildner 18 zugeführt. Im Richtungsbildner 18 werden aus den Empfangssignalen 16a bis 16c Richtungssignale 20a bis 20c erzeugt, die jeweils einer relativen Richtung 21a bis 21c zur Empfängeranordnung 12 der Peilvorrichtung 10, die z.B. auf einem Unterwasserfahrzeug angeordnet ist, zugeordnet werden. Die relativen Richtungen 21a bis 21c entsprechen jeweils einem Winkelbereich bzw. den Winkeln zwischen zwei festgelegten relativen Winkeln zur Empfängeranordnung. Beispielhaft ist z.B. eine der relativen Richtungen 21a bis 21c dem Winkelbereich von -45° bis -15°, also dem Bereich zwischen den beiden festgelegten Winkeln -45° und - 15°, zugeordnet. Alle relativen Winkel in diesem Winkelbereich entsprechen einer selben relativen Richtung 21a bis 21c.

Die Richtungssignale 20a bis 20c werden jeweils einem Spektralbildner 22 zugeführt. In jedem der Spektralbildner 22 wird aus einem der Richtungssignale 20a bis 20c ein Frequenzspektrum sowie dessen Betragsspektrum bzw. Amplitudenspektrum ermittelt. Es wäre auch denkbar, weitere aus den Amplituden bzw. Betragsspektrum abgeleitete Spektren zu ermitteln und in der weiteren Verarbeitung zu verwenden. Hier und im Weiteren soll jedoch beispielhaft nur das Amplitudenspektrum betrachtet werden. Jedes der einer relativen Richtung 21a bis 21c zugeordnete Amplitudenspektrum wird jeweils einem dem Spektralbildner 22 nachgeschalteten Frequenzbandbildner 24 zugeführt.

In jedem der Frequenzbandbildner 24 wird das zugeführte Amplitudenspektrum einer relativen Richtung 21a bis 21c in Frequenzbänder jeweils eines Teilfrequenzbereichs aufgeteilt. Die dadurch in einem der Frequenzbandbildner 24 erzeugten Frequenzbänder, jeweils eines Teilfrequenzbereichs, werden einem dem Frequenzbandbildner 24 nachgeschalteten Frequenzbandamplitudenbildner 26 zugeführt.

Im Frequenzbandamplitudenbildner 26 wird für jedes Frequenzband ein Frequenzbandamplitudenwert ermittelt, indem die Amplitudenwerte der im jeweiligen Teilfrequenzbereich eines Frequenzbands auftretenden Frequenzen zusammengefasst werden. Ein Zusammenfassen der einzelnen Amplitudenwerte eines Frequenzbandes kann z.B. durch Mittelwertbildung oder durch Addieren der einzelnen Amplitudenwerte erfolgen. Die Frequenzbandamplitudenwerte werden einem dem Frequenzbandamplitudenbildner 26 nachgeschalteten Panoramainterpolator 28 zugeführt.

Im Panoramainterpolator 28 werden interpolierte Frequenzbandamplitudenwerte für weitere interpolierte relative Richtungen berechnet, ohne dass weitere Richtungssignale 20a bis 20c berechnet werden müssen. Jeder im Panoramainterpolator 28 erzeugte interpolierte Frequenzbandamplitudenwert sowie die Frequenzbandamplitudenwerte der relativen Richtungen 21a bis 21c, die aus den Richtungssignalen 20a bis 20c erzeugt wurden, werden einem Peilungsentscheider 30 zugeführt.

Dem Peilungsentscheider 30 werden zusätzlich zu den Frequenzbandamplitudenwerten ein Schwellenwert 31 von einen Schwellenwertgeber 32 und eine Detektionsanzahl 33 von einem Detektionsanzahlgeber 34 zugeführt. Im Peilungsentscheider 30 wird ermittelt, wie viele Frequenzbandamplitudenwerte der Frequenzbänder, die derselben relativen Richtung zugeordnet sind, oberhalb des durch den Schwellenwertgeber 32 gegebenen Schwellenwerts 31 liegen. Liegt die Anzahl der Frequenzbandamplitudenwerte derselben Richtung über der vom Detektionsanzahlgeber 34 gegebenen Detektionsanzahl 33, so wird ein potentielles Ziel in dieser Richtung vermutet und die Richtung als Zielpeilung bzw. Zielrichtung bestimmt bzw. definiert oder festgelegt.

Fig. 2 zeigt eine genauere Darstellung des Richtungsbildners 18 aus Fig. 1. Der Richtungsbildner 18 enthält Frequenzumsetzer 36, Tiefpassfilter 38 sowie Analog-/Digital-Wandler 40. Jedem Frequenzumsetzer 36 wird jeweils eines der Empfangssignale 16a bis 16c zugeführt, das im jeweiligen Frequenzumsetzer 36, der z. B. ein Quadraturmischer ist, in einen tieferen Frequenzbereich umgesetzt wird. Diese Frequenzumsetzung erfolgt, um die Empfangssignale 16a bis 16c bei einer nachfolgenden Digitalisierung aufgrund des Nyquist-Shannon-Abtasttheorems mit einer geringeren Abtastrate abtasten zu können.

Die frequenzumgesetzten Empfangssignale werden jeweils einem Tiefpassfilter 38 zugeführt, um darin die bei der Frequenzumsetzung entstehenden Summenmischprodukte aus jedem der frequenzumgesetzten Empfangssignale zu entfernen. Jedes der frequenzumgesetzten tiefpassgefilterten Empfangssignale wird jeweils einem den Tiefpassfiltern 38 nachgeschalteten Analog-/Digital-Wandler 40 zugeführt und in diesem digitalisiert. Hierbei ist eine Abtastrate für die Umsetzung der analogen in digitale Signale zu wählen, die das Nyquist-Shannon-Abtasttheorem berücksichtigt, wobei die Abtastrate ansonsten frei wählbar und vor allem abhängig von der Hardware für die Umsetzung ist. Die frequenzumgesetzten tiefpassgefilterten digitalisierten Empfangssignale werden danach einer Zeitverzögerungs-Additionseinheit 42 zugeführt.

In der Zeitverzögerungs-Additionseinheit 42 werden die frequenzumgesetzten tiefpassgefilterten digital gewandelten Empfangssignale zeitverzögert miteinander addiert. Durch die Wahl der Zeitdauern, um die die frequenzumgesetzten tiefpassgefilterten digitalisierten Empfangssignale 16a bis 16c jeweils zeitverzögert und danach miteinander addiert werden, werden die in Empfangssignale 16a bis 16c umgewandelten Schallwellen 15 einer bestimmten der relativen Richtung 21a bis 21c verstärkt und die in Empfangssignale 16a bis 16c umgewandelten Schallwellen 15 der übrigen der relativen Richtungen 21 a bis 21 c abgeschwächt. Hierdurch entsteht aus den Empfangssignalen 16a bis 16c eines der Richtungssignale 20a bis 20c. Die übrigen der Richtungssignale 20a bis 20c werden durch unterschiedliche Wahl der Zeitdauern ermittelt.

Anstatt der Zeitverzögerungs-Additionseinheit 42 wäre ebenfalls eine Phasenverzögerungs-Additionseinheit möglich. In dieser würden die frequenzumgesetzten tiefpassgefilterten digitalisierten Empfangssignale 16a bis 16c bzgl. ihrer Phase verschoben miteinander addiert werden, um die Richtungssignale 20a bis 20c zu bilden.

Fig. 3 zeigt eine genauere Darstellung eines der Spektralbildner 22 aus Fig. 1 dem ein Richtungssignal 20a der Richtungssignale 20a bis 20c zugeführt wird. Aus dem Richtungssignal 20a wird im Spektralbildner 22 ein Amplitudenspektrum 46 einer der relativen Richtungen 21 a bis 21 c erzeugt, wobei diese der relative Richtungen 21 a bis 21 c der relativen Richtung des zugeführten Richtungssignals 20a entspricht. Dem Amplitudenspektrum 46 ist also eine relative Richtung zugeordnet.

Der Spektralbildner 22 weist dazu zunächst einen Fensterbildner 48, eine dem Fensterbildner 48 nachgeschaltete DFT-Recheneinheit 50 und einen der DFT-Recheneinheit 50 nachgeschalteten Betragsbildner 52 auf. Das Richtungssignal 20a wird dem Fensterbildner 48 zugeführt, wobei in dem Fensterbildner das zeitliche Richtungssignal 20a chronologisch in gleich große Zeitfenster einer definierten Zeitdauer eingeteilt und mit einer Fensterfunktion gefiltert bzw. gefenstert wird. D.h. es werden nacheinanderfolgende Zeitabschnitte oder Zeitbereiche des zeitlichen Richtungssignals 20a jeweils einem Zeitfenster des Richtungssignals 20a zugeordnet und dieses der Fensterfunktion unterworfen. Es ist auch denkbar, die Fenster sich überlappender Zeitbereiche des Richtungssignals 20a zu bilden. Hier wäre z.B. eine Überlappung der einzelnen Zeitbereiche um 50% der Zeitdauer eines Zeitbereichs denkbar.

Aus jedem Zeitfenster des Richtungssignals 20a wird in der DFT-Einheit 50, z.B. mit der schnellen Fourier-Transformation FFT, ein Frequenzspektrum des Richtungssignals 20a berechnet. Das Frequenzspektrum wird einem Betragsbildner 52 zugeführt, der durch Betragsbildung daraus ein Amplitudenspektrum 46 ermittelt bzw. berechnet. Das Amplitudenspektrum 46, das ebenfalls der relativen Richtung des Richtungssignals 20a zugeordnet ist, wird dann vom Spektralbildner 22 ausgegeben.

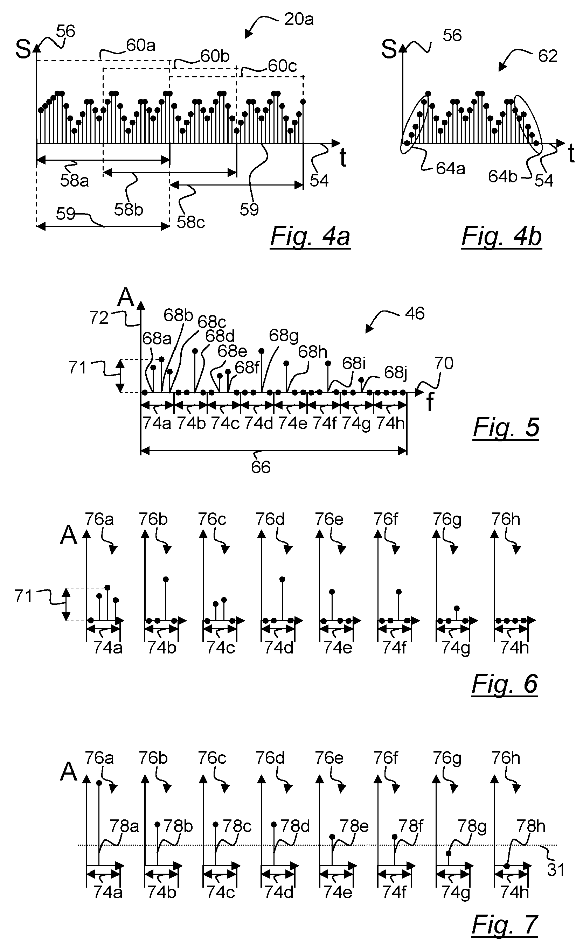

Die folgenden Fig. 4a bis 7 zeigen Teile der Signalverarbeitung der in Fig. 1 gezeigten Peilvorrichtung, ohne weitere interpolierte Frequenzbandamplitudenwerte für relative Richtungen mit dem Panoramainterpolator 28 zu ermitteln.

Fig. 4a zeigt schematisch einen Ausschnitt aus einem beispielhaften zeitlichen Verlauf des Richtungssignals 20a, wobei auf einer ersten Achse 54 die Zeit t und auf einer zweiten Achse 56 die Signalstärke S des Ausschnitt des Richtungssignals 20a aufgetragen sind. Die erste Achse 54 wird in sich überlappende gleich große Zeitbereiche 58a bis 58c derselben Zeitdauer 59 eingeteilt. Jeder Teilausschnitt des Richtungssignals 20a in einem dieser Zeitbereiche 58a bis 58c entspricht einem Zeitfenster 60a bis 60c. Die Zeitbereiche 58a bis 58c der Zeitdauer 59 sind hier beispielhaft als sich zu 50% überlappend dargestellt. Es sind jedoch auch Zeitbereiche 58a bis 58c möglich, die nebeneinander liegen oder sich andersartig überlappen.

Fig. 4b zeigt die Darstellung eines mit einer Fensterfunktion gefilterten Zeitfensters 62, das dem Zeitfensters 60a der Zeitfester 60a bis 60c des Richtungssignals 20a aus Fig. 4a nach der Fensterbildung mit dem Fensterbildner 48 aus Fig. 3 entspricht. Durch die Filterung bzw. Fensterung mit z.B. einem "Hamming-Fenster" entsprechen die Funktionsargumente in den Randbereichen 64a, 64b des Zeitfensters 62 nicht mehr den Funktionsargumenten des Zeitfenster 60a aus Fig. 4a, sondern fallen zu den außenliegenden größten und kleinsten Funktionsargumenten mit ihren Funktionswerten auf Werte im Bereich von Null ab. Diese Fensterung ist sinnvoll, um im nächsten Schritt eine diskrete Fourier-Transformation oder schnelle diskrete Fourier-Transformation durchführen zu können, ohne störende Effekte des sog. "Leck-Effekts" zu erhalten.

Fig. 5 zeigt das einer der relativen Richtungen 21 a bis 21 c zugeordnete Amplitudenspektrum 46, das am Ausgang des Spektralbildners 22 aus Fig. 3 erzeugt wird. Das Amplitudenspektrum 46 wird z.B. aus einem der Zeitfenster 60a bis 60c eines der Richtungssignale 20a bis 20c erhalten, wenn dieses Zeitfenster 60a bis 60c gefiltert danach einer DFT-Einheit 50 zugeführt und mit dem Betragsbildner 52 aus Fig. 3 der Betrag berechnet wird. Das in Fig. 5 dargestellte Amplitudenspektrum 46 entspricht bzgl. der Funktionswerte nicht dem in Fig. 4b dargestellten gefensterten Zeitfenster 62, sondern ist exemplarisch zur besseren Übersicht in dargestellter Weise aufgezeigt. Das Amplitudenspektrum 46 umfasst einen Frequenzbereich 66. Jede der innerhalb des Frequenzbereichs 66 auftretenden Frequenzen 68a bis 68j entspricht einem der Funktionsargumente des Amplitudenspektrums 46 auf einer Frequenzachse 70 und weist als Funktionswert einen Amplitudenwert 71 größer Null auf. Die Amplitudenwerte 71 können dabei auf der Amplitudenachse 72 abgelesen werden. Der Frequenzbereich 66 des Amplitudenspektrums 46 wird durch Einteilung des Frequenzbereichs 66 des Amplitudenspektrums 46 in benachbarte Teilfrequenzbereiche 74a bis 74h eingeteilt.

Fig. 6 zeigt Frequenzbänder 76a bis 76h, die jeweils Frequenzen aufweisen. Hierbei entsprechenden die Frequenzen 68a bis 68j jeweils eines der Frequenzbänder 76a bis 76h einem der Teilfrequenzbereiche 74a bis 74h des in Fig. 5 dargestellten Amplitudenspektrums 46. Jedes der Frequenzbänder 76a bis 76h weist dazu Funktionsargumente der Frequenzen 68a bis 68j auf, deren Funktionswerte dem jeweiligen Amplitudenwert 71 der jeweiligen Frequenz der Frequenzen 68a bis 68j entsprechen.

Fig. 7 zeigt wiederum die Frequenzbänder 76a bis 76h aus Fig. 6, wobei nun jedes der Frequenzbänder 76a bis 76h nur noch jeweils einen Frequenzbandamplitudenwert 78a bis 78h anstatt mehrerer Funktionsargumente mit Funktionswerten, also Frequenzen 68a bis 68h mit Amplitudenwerten 71, aufweist. Die Frequenzbandamplitudenwerte 78a bis 78h sind hier jeweils durch Addition der Amplitudenwerte 71 bzw. der Funktionswerte der innerhalb eines der Frequenzbänder 76a bis 76h auftretenden Frequenzen 68a bis 68j bzw. Funktionsargumente zusammengefasst worden. Jeder der Frequenzbandamplitudenwerte 78a bis 78h ist derselben relativen Richtung 21 a bis 21 c zugeordnet, der auch das Richtungssignal 20a, aus dem das Amplitudenspektrum 46 ermittelt wurde, zugeordnet ist, aus dem die Frequenzbandamplitudenwerte 78a bis 78h ermittelt wurden. Ferner ist der Schwellenwert 31, der z.B. vom Schwellenwertgeber 32 aus Fig. 1 dem Peilungsentscheider 30 zugeführt wird, dargestellt.

Vernachlässigt man den Panoramainterpolator 28 in Fig. 1, so kann mit den Frequenzbandamplitudenwerten 78a bis 78h der relativen Richtungen 21 a bis 21 c direkt im Peilungsentscheider 30 diejenigen der relativen Richtungen 21 a bis 21 c als Zielpeilung erkannt werden, die eine Anzahl von Frequenzbändern 76a bis 76h mit Frequenzbandamplitudenwerten 78a bis 78h aufweist, die oberhalb des Schwellenwertes 31 liegen die oberhalb einer Detektionsanzahl 33 liegen. Dies trifft für die Frequenzbandamplitudenwerte 78a bis 78h in Fig. 7 dann zu, wenn eine Detektionsanzahl 33 vom Wert 5 oder kleiner gewählt wird. Im Einzelnen weisen hier die linken 6 Frequenzbänder 76a bis 76f jeweils einen Frequenzbandamplitudenwert 78a bis 78f oberhalb des Schwellenwertes 31 auf, wogegen die rechten zwei Frequenzbänder 76g, 76h jeweils einen Frequenzbandamplitudenwert 78a bis 78h unterhalb des Schwellenwertes 31 aufweisen. Die den Frequenzbandamplitudenwert 78a bis 78h zugeordnete relative Richtung 21 a bis 21 c wird somit als Zielpeilung bestimmt. In dieser als Zielpeilung bestimmten relativen Richtung wird also ein potentielles Ziel erwartet und kein schallabstrahlender Störer.

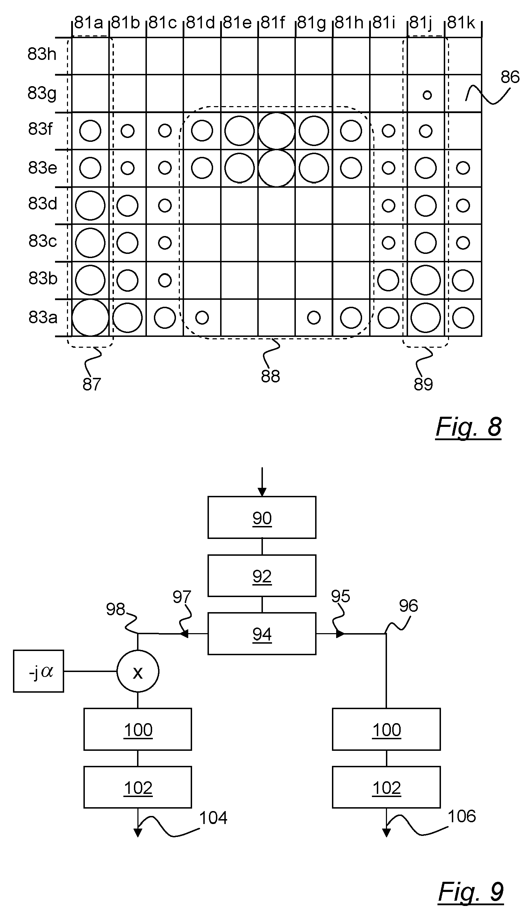

Fig. 8 zeigt eine Matrix 80 mit Spalten 81 a bis 81 k sowie Zeilen 83a bis 83h. Die benachbarten Spalten 81a bis 81k der Matrix 80 werden die relativen Richtungen 21a bis 21c zugeordnet. Jede Spalte entspricht also einer der relativen Richtungen 21 a bis 21 c. Die benachbarten Reihen 83a bis 83h der Matrix 80 werden den benachbarten Frequenzbändern 76a bis 76h zugeordnet. Jede Reihe entspricht also einem der Frequenzbänder 76a bis 76h. Jedes Element 86 enthält dabei einen der Frequenzbandamplitudenwerte 78a bis 78h einer der relativen Richtungen 21 a bis 21 c eines der Frequenzbänder 76a bis 76h. Es werden in der Matrix 80 nur Frequenzbandamplitudenwerte 78a bis 78h eingetragen bzw. angezeigt, die oberhalb des Schwellenwertes 31 liegen.

Die unterschiedlichen Frequenzbandamplitudenwerte 78a bis 78h sind in Fig. 8 durch Kreisflächen mit verschiedenen Durchmessern dargestellt. Ein großer Durchmesser entspricht einem hohen Frequenzbandamplitudenwert 78a bis 78h, während ein geringer Durchmesser einem geringen Frequenzbandamplitudenwert 78a bis 78h entspricht. Die Amplitudenspektren 46 der relativen Richtungen 21 a bis 21 c sowie deren Frequenzbandamplitudenwerte 78a bis 78h werden mit einer festgelegten Wiederholfrequenz aus den Zeitfenstern 60a bis 60c der Richtungssignale 20a bis 20c erneut ermittelt und die Matrix 80 jeweils mit den neu ermittelten oder berechneten Frequenzbandamplitudenwerten 78a bis 78h aktualisiert.

In der am weitesten links dargestellten Spalte 87 der Matrix 80 sind exemplarisch die Frequenzbandamplitudenwerte 78a bis 78h der Frequenzbänder 76a bis 76h aus Fig. 7 dargestellt. Wird in Fig. 8 die Detektionsanzahl 33 auf z.B. den Wert 5 festgelegt, so wird aus der relativen Richtung 21a bis 21 c, die diese Spalte zugeordnet ist, ein Ziel erkannt und diese relative Richtung 21a bis 21c somit als Zielpeilung bzw. mögliche Zielrichtung bestimmt. Allerdings werden auch in den beiden danebenliegenden Spalten eine Anzahl von Frequenzbändern 76a bis 76h, die oberhalb der Detektionsanzahl 33 liegen mit Frequenzbandamplitudenwerten 78a bis 78h oberhalb des Schwellenwertes 31 erkannt. Da aber die Frequenzbandamplitudenwerte 78a bis 78h der ersten bzw. am weitesten links liegende Spalte 87 im Vergleich zu der benachbarten sowie der dazu benachbarten Spalte wesentlich höher bzw. größer sind, wird nur die relative Richtung 21 a bis 21 c der ersten Spalte 87 der Matrix 80 als Zielpeilung erkannt.

Ferner treten im mittleren Bereich 88 der Matrix 80 jeweils zwei bzw. drei Frequenzbandamplitudenwerte 78a bis 78h in einer Spalte der Matrix 80 auf, die oberhalb des in Fig. 7 festgelegten Schwellenwerts liegen. Die diesen Spalten entsprechenden relativen Richtungen 21 a bis 21 c können daher eindeutig als Richtung erkannt werden, in denen ein Störer ein schmalbandiges Signal sendet. Ein weiteres Ziel wird in einer Spalte im rechten Bereich 89 der Matrix 80 vermutet, wodurch die der Spalte in diesem rechten Bereich 89 zugeordnete relative Richtung 21 a bis 21 c ebenfalls als Zielpeilung erkannt wird.

Um die Auflösung der in Fig. 8 gezeigten Matrix 80 zu erhöhen, können interpolierte Frequenzbandamplitudenwerte weiterer relativer Richtungen durch Interpolation der Frequenzbandamplitudenwerte 78a bis 78h jeweils eines Frequenzbandes 74a bis 74h der relativen Richtungen 21 a bis 21 c interpoliert werden.

In Fig. 9 werden die Schritte aufgezeigt, die im Panoramainterpolator 28 in der Peilvorrichtung 10 zur Interpolation durchgeführt werden. Zunächst werden die Frequenzbandamplitudenwerte 78a bis 78h der Frequenzbänder 76a bis 76h der relativen Richtungen 21 a bis 21 c einem Winkelbereichsfunktionsbildner 90 zugeführt. Dieser bildet aus den Frequenzbandamplitudenwerten 78a bis 78h jeweils eines der Frequenzbänder 76a bis 76h aller der relativen Richtungen 21 a bis 21 c eine Winkelbereichsfunktion mit ersten Funktionsargumenten. Benachbarte erste Funktionsargumente einer Winkelbereichsfunktion werden durch die benachbarten Winkelbereiche der benachbarten relativen Richtungen 21 a bis 21 c gebildet. Jedem ersten Funktionsargument wird als Funktionswert der Frequenzbandamplitudenwert 78a bis 78h zugeordnet, der der relativen Richtung 21 a bis 21 c des jeweiligen für die Winkelbereichsfunktion gewählten Frequenzbandes 76a bis 76h entspricht.

Jede der Winkelbereichsfunktion wird einer Auffülleinheit 92 zugeführt. Diese Auffülleinheit 92 fügt den ersten Funktionsargumenten unterhalb des kleinsten Funktionsarguments der ersten Funktionsargumente kleinere Funktionsargumente mit Winkelbereichen mit vergleichsweise kleineren Winkeln als den Winkeln der Winkelbereiche der ersten Funktionsargumente und oberhalb des größten Funktionsarguments der ersten Funktionsargumente größere Funktionsargumente mit Winkelbereichen mit vergleichsweise größeren Winkeln als den Winkeln der Winkelbereiche der ersten Funktionsargumente ein. Es werden oberhalb und unterhalb der ersten Funktionsargumente genauso viele kleine und größere Funktionsargumente hinzugefügt, sodass die Gesamtanzahl der Funktionsargumente einer Winkelbereichsfunktion einer Zweierpotenz entspricht.

Die aufgefüllten Winkelbereichsfunktionen werden nun jeweils einer diskreten Fourier-Transformation in einer weiteren DFT-Einheit 94 zugeführt. Die weitere DFT-Einheit erzeugt aus jeder Winkelbereichsfunktion eine erste und eine zweite Spektralfunktion, wobei eine erste Spektralfunktion 95 einem ersten Verarbeitungspfad 96 und eine der ersten Spektralfunktion identische zweite Spektralfunktion 97 einem zweiten Verarbeitungspfad 98 zugeführt wird. Die zweite Spektralfunktion 97 wird mit der Funktionsvariablen, bestehend aus der imaginären Einheit, meist als "i" oder "j" bezeichnet und der Variablen der Spektralfunktion, z.B. α multipliziert. Nach dieser Multiplikation wird die mit der Funktionsvariablen multiplizierte zweite Spektralfunktion einem Nullauffüller 100 zugeführt.

Im Nullauffüller 100 werden die ersten Spektralfunktionsargumente der zweiten Spektralfunktion 97 in der Mitte zwischen den mittleren Spektralfunktionsargumenten der ersten Spektralfunktionsargumenten mit weiteren Spektralfunktionsargumenten aufgefüllt, wobei die Funktionswerte der weiteren Spektralfunktionsargumente im Bereich von Null liegen. Nach Auffüllen mit weiteren Spektralfunktionsargumenten wird die aufgefüllte multiplizierte zweite Spektralfunktion einer IDFT-Einheit 102 zugeführt, die diese aus dem Spektralbereich, z.B. mit einer schnellen inversen Fourier-Transformation, zurück transformiert. Hierdurch entsteht am Ende des zweiten Verarbeitungszweigs 95 eine zweite interpolierte Winkelbereichsfunktion 104, die zwischen den ersten und größeren sowie kleineren Funktionsargumenten interpolierte weitere Funktionsargumente aufweist.

Im ersten Verarbeitungszweig 96 wird mit der ersten Spektralfunktion 95, abgesehen von der Multiplikation mit der Funktionsvariablen in gleicher Weise verfahren. Es ergibt sich am Ende des ersten Verarbeitungszweiges 96 dadurch eine erste interpolierte Winkelbereichsfunktion 106 mit interpolierten Funktionsargumenten. Im zweiten Verarbeitungszweig 98 ergibt sich entsprechend durch die Multiplikation mit der Funktionsvariablen die zweite interpolierte Winkelbereichsfunktion 104 als die Ableitung der ersten interpolierten Winkelbereichsfunktion 106, deren Nullstellen den Maxima der ersten interpolierten Winkelbereichsfunktion 106 entsprechen.

Die erste interpolierte Winkelfunktion 106 sowie deren Ableitung, also die zweite interpolierte Winkelbereichsfunktion 104 kann nun für jedes der Frequenzbänder 76a bis 76h berechnet werden und daraus eine der in Fig. 8 ähnliche Matrix 80 aufgestellt werden. Die interpolierten Funktionsargumente entsprechen dann interpolierten weiteren relativen Richtungen und stellen weitere Spalten 81 a bis 81 k der Matrix 80 dar.

Die Ableitungen der ersten interpolierten Winkelfunktionen 106 ergeben hierbei eindeutig die Maxima der ersten interpolierten Winkelfunktion 106 durch die Nullstellen der zweiten interpolierten aufgefüllten Winkelfunktion 104. Benachbarte relative Richtungen 21 a bis 21 c, die als Zielpeilung bestimmt werden, können somit einfach bzgl. der höchsten Frequenzbandamplitudenwerte 78a bis 78h untersucht bzw. verglichen werden.

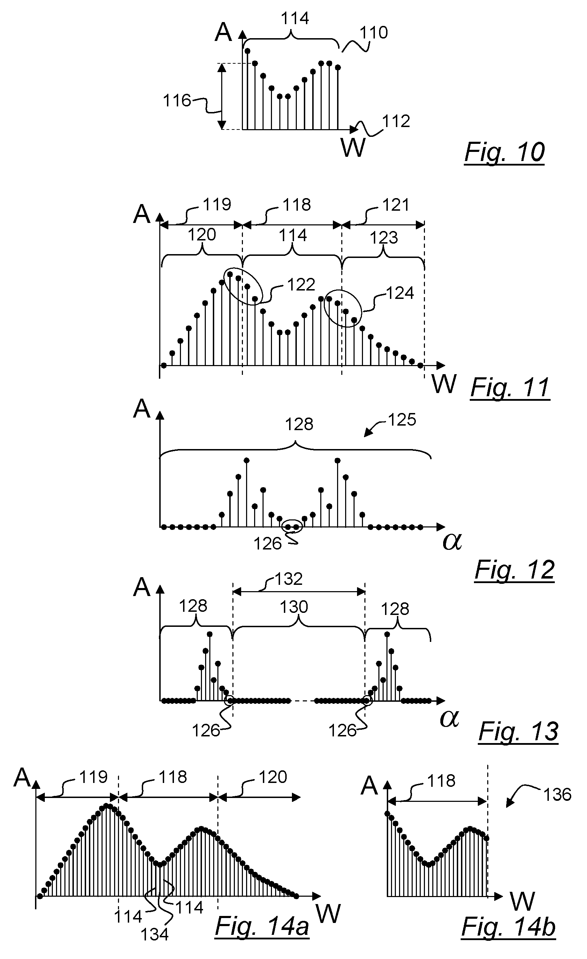

Fig. 10 zeigt eine Winkelbereichsfunktion 110, die aus den Frequenzbandamplitudenwerten 78a bis 78h eines der Frequenzbänder 76a bis 76h der relativen Richtungen 21 a bis 21 c gebildet wird. Auf der ersten Achse 112 sind dazu die Winkelbereiche W, die den relativen Richtungen 21 a bis 21 c entsprechen, aufgetragen. Erste Funktionsargumente 114 werden jeweils durch eine Stützstelle dargestellt, die dem Winkelbereich einer relativen Richtung 21a bis 21 c entspricht. Die jeweilige Länge der Stützstelle bezeichnet den Funktionswert 116 des jeweiligen ersten Funktionsarguments 114 einer der relativen Richtungen 21a bis 21 c. Der Funktionswert 116 jedes ersten Funktionsarguments 114 entspricht hierbei dem Wert 71 des Frequenzbandamplitudenwerts 78a bis 78h des Frequenzbandes 76a bis 76h der relativen Richtung 21 a bis 21 c des jeweiligen ersten Funktionsarguments 114.

Fig. 11 zeigt in einem mittleren Abschnitt 118 die ersten Funktionsargumente 114 der Winkelfunktion 110 aus Fig. 10. Linksseitig des mittleren Abschnitts 118 in einem linksseitigen Abschnitt 119 sind bzgl. der Winkel des Winkelbereichs kleinere Funktionsargumente 120 hinzugefügt worden. Rechtsseitig des mittleren Abschnitts 118 sind in einem rechtsseitigen Abschnitt 121 bzgl. der Winkel des Winkelbereichs größere Funktionsargumente 123 hinzugefügt worden. Die Funktionswerte 116 der kleineren Funktionsargumente 120 führen die Steigung der ersten Funktionsargumente 114 im Bereich 122 des kleinsten Funktionsarguments der ersten Funktionsargumente 114 fort, bevor die Funktionswerte 116 der kleineren Funktionsargumente 120 bis zum kleinsten Funktionsargument der kleineren Funktionsargumente 120 auf einem Wert im Bereich von Null abfallen. Gleiches gilt für die größeren Funktionsargumente 123. Hier wird die Steigung der Funktionswerte 116 im Bereich 124 des größten Funktionsarguments der ersten Funktionsargumente 114 in diesem Bereich durch die größeren Funktionsargumente 123 fortgeführt, bevor der Funktionswert des größten der größeren Funktionsargumente 122 auf einen Funktionswert im Bereich von Null abfällt. Die Gesamtanzahl der Funktionsargumente der in Fig. 11 dargestellten Winkelbereichsfunktion 110 entspricht einer Zweierpotenz, nämlich der Anzahl 32.

Fig. 12 zeigt das Betragsspektrum 125 einer ersten Spektralfunktion 95 mit ersten Spektralfunktionsargumenten 128, das aus einer z.B. mit einer Fourier-Transformation transformierten Winkelbereichsfunktion 110 mit nachfolgender Betragsbildung entsteht. Das dargestellte Betragsspektrum 125 ist symmetrisch bzgl. der mittleren Spektralfunktionsargumente 126 der ersten Spektralfunktionsargumenten 128, da die Winkelbereichsfunktion 110 aus der das Betragsspektrum 125 der ersten Spektralfunktion 95 ermittelt wird, reellwertig ist. Durch die Fourier-Transformation entsteht zusätzlich neben dem Betragsspektrum 125 ein Phasenspektrum derselben ersten Spektralfunktion. Dieses ist hier und auch im Weiteren nicht dargestellt, wird aber in gleicher Weise wie das jeweilige Betragsspektrum derselben Spektralwinkelbereichsfunktion 95 in den folgenden Schritten behandelt.

Fig. 13 zeigt ein aufgefülltes Betragsspektrum 125 einer ersten Spektralfunktion, deren erste Spektralfunktionsargumente 128 mit weiteren Spektralfunktionsargumenten 130, die jeweils einen Funktionswert im Bereich von Null aufweisen, aufgefüllt sind. In einem mittleren Abschnitt 132 des aufgefüllten Amplitudenspektrums 125 sind zwischen die mittleren Spektralfunktionsargumente 126 weitere Spektralfunktionsargumente 130 eingefügt, wobei das aufgefüllte Amplitudenspektrum 125 der ersten Spektralwinkelfunktion 95 weiterhin symmetrisch ist.

Fig. 14a zeigt die in Fig. 11 dargestellt Winkelbereichsfunktion 110, die gemäß der in Fig. 12 und Fig. 13 dargestellten Weise mit weiteren Spektralfunktionsargumenten 130 aufgefüllte und mit einer inversen Fourier-Transformation aus dem Spektralbereich zurück transformierte ist und somit einer ersten interpolierten Winkelbereichsfunktion 106 entspricht. Im mittleren Abschnitt 118 sowie im linksseitigen Abschnitt 119 und im rechtsseitigen Abschnitt 120 sind im Vergleich zu Fig. 11 weitere Funktionsargumente 134 zwischen den ersten, kleineren und größeren Funktionsargumenten 114 durch das Auffüllen im Spektralbereich erzeugt worden. Diese weiteren Funktionsargumente 134 entsprechen interpolierten weiteren Funktionsargumenten mit interpolierten Funktionswerten interpolierter weiterer relativen Richtungen.

Fig. 14b zeigt den mittleren Abschnitt 118 der interpolierten ersten Winkelbereichsfunktion 106 aus Fig. 14a, der nach Auskopplung des linksseitigen Abschnitts 119 und des rechtsseitigen Abschnitts 120 z.B. durch einfaches Ausblenden erhalten wird. Der in Fig. 14b dargestellte mittlere Abschnitt 118 entspricht der Winkelbereichsfunktion 110 aus Fig. 10, jedoch mit interpolierten weiteren Funktionsargumenten 134.

Diese ausgeschnittene interpolierte erste Winkelbereichsfunktion 136 kann nun für jedes Frequenzband 76a bis 76h in der in Fig. 10 bis Fig. 14a dargebotenen Weise berechnet werden. Aus dieser Berechnung werden interpolierte Frequenzbandamplitudenwerte 78a bis 78h erhalten, die interpolierte Funktionswerte der interpolierten Frequenzargumente aufweisen und die in der in Fig. 8 dargestellte Matrix dargestellt werden können, um weitere interpolierte relative Richtungen darstellen zu können, die als Zielpeilung bestimmt werden können.

Das erfindungsgemäße Verfahren kann vorteilhafterweise im Bereich von Unterwasserfahrzeugen oder Unterwasserlaufkörper eingesetzt werden. Hierbei wird die Sonaranlage eines Unterwasserfahrzeugs durch die erfindungsgemäße Vorrichtung ergänzt bzw. derart ausgelegt, dass die Sonaranlage das erfindungsgemäße Verfahren durchführen kann.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Offenbarung der Erfindung ist somit nicht auf die beschriebenen bzw. beanspruchten Merkmalskombinationen beschränkt. Vielmehr sind alle Merkmalskombinationen als offenbart zu betrachten.

**Patentansprüche**

1. Verfahren zum Bestimmen einer oder mehrerer relativer Richtungen (21a bis 21c) als Zielpeilung bzw. Zielpeilungen, wobei Schallwellen (15) mit einer Empfängeranordnung (12) empfangen, aus den Schallwellen (15) mittels der Empfängeranordnung (12) Empfangssignale (16a bis 16c) ermittelt und aus den Empfangssignalen (16a bis 16c) mittels Beamforming Richtungssignale (20a bis 20c) jeweils einer zur Empfängeranordnung (12) relativen Richtung (21a bis 21c) ermittelt werden, die einen zeitlichen Verlauf aufweisen, und aus jedem Richtungssignal (20a bis 20c) ein der relativen Richtung (21 a bis 21 c) des Richtungssignals (20a bis 20c) zugeordnetes Betragsspektrum (46) bzw. ein aus dem Betragsspektrum (46) mittels Anwendung mathematischer Funktionen und/oder durch Addition und/oder Multiplikation mit einer Konstanten erhaltenes abgeleitetes Spektrum ermittelt wird,
**dadurch gekennzeichnet, dass**
aus dem Frequenzbereich (66) jedes Betragsspektrums (46) bzw. jedes aus dem Betragsspektrum (46) abgeleiteten Spektrums Frequenzbänder (76a bis 76h) durch Einteilen des Frequenzbereichs des Betragsspektrums (46) bzw. des aus dem Betragsspektrum (46) abgeleiteten Spektrums ermittelt werden, die Amplitudenwerte (71) der in einem der Frequenzbänder (76a bis 76h) auftretenden Frequenzen (68a bis 68j) als ein Frequenzbandamplitudenwert (78a bis 78h) des jeweiligen Frequenzbandes (76a bis 76h) durch Mittelwertbildung oder mittels Addition oder Multiplikation der Amplitudenwerte oder der mit einem Verstärkungsfaktor addierten oder multiplizierten Amplitudenwerte des jeweiligen Frequenzbandes (76a bis 76h) zusammengefasst werden und die relative Richtung (21a bis 21c), die einem Betragsspektrum (46) bzw. einem aus dem Betragsspektrum (46) abgeleiteten Spektrum zugeordnet ist, als eine Zielpeilung bestimmt wird, wenn das dieser relativen Richtung (21a bis 21c) zugeordnete Betragsspektrum (46) bzw. das aus dem Betragsspektrum (46) abgeleitete Spektrum mindestens eine Anzahl von Frequenzbandamplitudenwerten (78a bis 78h) oberhalb eines Schwellenwertes (31) aufweist, die oberhalb einer festgelegten Detektionsanzahl (33) liegt und somit eine Grenze festgelegt bzw. gewählt wird, ab welcher Bandbreite von einfallenden Schallwellen (15) diese Schallwellen (15) einem potenziellen Ziel zugeordnet werden.

2. Verfahren nach Anspruch 1,
**dadurch gekennzeichnet, dass**
im Falle, dass mehrere benachbarte relative Richtungen (21a bis 21c) jeweils ein Betragsspektrum (46) bzw. ein aus dem Betragsspektrum (46) abgeleitetes Spektrum mit mindestens einer Anzahl Frequenzbandamplitudenwerten (78a bis 78h) oberhalb des Schwellenwertes (31), die oberhalb der festgelegten Detektionsanzahl (33) liegt, aufweisen, nur die relative Richtung (21a bis 21c) dieser benachbarten relativen Richtungen (21a bis 21c) als Zielpeilung bestimmt wird, die die größte Anzahl von höchsten Frequenzbandamplitudenwerten (78a bis 78h) jeweils gleicher Frequenzbänder (76a bis 76h), also mit gleichen Teilfrequenzbereichen, dieser benachbarten relativen Richtungen (21 a bis 21c) aufweist.

3. Verfahren nach Anspruch 1 oder 2,
**dadurch gekennzeichnet, dass**
die Frequenzbandamplitudenwerte (78a bis 78h) eines oder mehrerer Frequenzbänder (76a bis 76h) ausgeblendet werden, indem die Frequenzbandamplitudenwerte (78a bis 78h) der auszublendenden Frequenzbänder (76a bis 76h) auf einen Wert unterhalb des festgelegten Schwellenwerts (31) festgelegt werden, wobei dazu ein oder mehrere Teilfrequenzbereiche festgelegt werden und alle Frequenzbandamplitudenwerte (78a bis 78h) der Frequenzbänder (76a bis 76h) auf einen Wert, der unterhalb des festgelegten Schwellenwerts (31) liegt, festgelegt oder festgesetzt werden.

4. Verfahren nach einem der vorherigen Ansprüche,
**dadurch gekennzeichnet, dass**
die Empfangssignale (16a bis 16c) zum Ermitteln der Richtungssignale (20a bis 20c) jeweils mit einem Frequenzumsetzer (36) in ein tieferes Band frequenzumgesetzt, die frequenzumgesetzten Empfangssignale (16a bis 16c) jeweils mit einem Tiefpassfilter (38) tiefpassgefiltert, die tiefpassgefilterten frequenzumgesetzten Empfangssignale (16a bis 16c) jeweils mit einem Analog-/Digital-Wandler (40) digitalisiert und die digitalisierten tiefpassgefilterten frequenzumgesetzten Empfangssignale (16a bis 16c) jeweils mit einer Zeitverzögerungs-Additionseinheit (42) zeitversetzt miteinander addiert werden.

5. Verfahren nach einem der vorherigen Ansprüche,
**dadurch gekennzeichnet, dass**
zum Ermitteln eines einer relativen Richtung (21a bis 21c) zugeordneten Betragsspektrums (46) bzw. aus dem Betragsspektrum (46) abgeleiteten Spektrums, das Richtungssignal (20a bis 20c) der jeweiligen relativen Richtung (21a bis 21c), das einen zeitlichen Verlauf aufweist, chronologisch in Zeitfenster (60a bis 60c) jeweils der gleichen Zeitdauer (59) jeweils eines Zeitbereichs (58a bis 58c) des Richtungssignals (20a bis 20c) eingeteilt wird.

6. Verfahren nach Anspruch 5,
**dadurch gekennzeichnet, dass**
die Betragsspektren (46) bzw. die aus den Betragsspektren (46) abgeleiteten Spektren sowie deren Frequenzbandamplitudenwerte (78a bis 78h) mit einer festgelegten Wiederholfrequenz erneut aus den Zeitfenstern (60a bis 60c) des gleichen jeweiligen aktuellen Zeitbereichs (58a bis 58c) für jede der relativen Richtungen (21a bis 21c) ermittelt werden.

7. Verfahren nach einem der vorherigen Ansprüche, **dadurch gekennzeichnet, dass** eine Matrix (80) mit Elementen (86), die jeweils einer Zeile der Matrix (80) und einer Spalte der Matrix (80) zugeordnet sind, gebildet wird, wobei jeder Zeile ein Frequenzband (76a bis 76h) und jeder Spalte eine relative Richtung (21a bis 21c) oder jeder Spalte ein Frequenzband (76a bis 76h) und jeder Zeile eine relative Richtung (21a bis 21c) zugeordnet wird und benachbarte Frequenzbänder (76a bis 76h) benachbarte Zeilen bzw. Spalten und benachbarte relative Richtungen (21a bis 21c) benachbarten Spalten bzw Zeilen zugeordnet werden, wodurch jedem Element (86) der Matrix (80) ein Frequenzband (76a bis 76h) und eine relative Richtung (21a bis 21c) zugeordnet ist und in jedes Element (86) der Frequenzbandamplitudenwert (78a bis 78h) des dem Element (86) zugeordneten Frequenzbandes (76a bis 76h) der dem Element (86) zugeordneten relativen Richtung (21a bis 21c) eingetragen wird bzw. dieser Frequenzbandamplitudenwert (76a bis 76h) in diesem Element (86) dargestellt wird.

8. Verfahren nach einem der vorherigen Ansprüche, **dadurch gekennzeichnet, dass** jede der relativen Richtungen (21a bis 21c) jeweils einem Winkelbereich entspricht und für jedes der Frequenzbänder (76a bis 76h) eine Winkelbereichsfunktion (110) mit ersten Funktionsargumenten (114) gebildet wird, indem jedem ersten Funktionsargument (114) ein Winkelbereich einer relativen Richtung (21a bis 21c) zugewiesen wird, wobei dann die ersten Funktionsargumente (114) der Winkelbereichsfunktion (110) jeweils einem Winkelbereich entsprechen und jeweils jedem der ersten Funktionsargumente (114) als Funktionswert (116) der Frequenzbandamplitudenwert (78a bis 78h) des Frequenzbandes (76a bis 76h), für das die jeweilige Winkelbereichsfunktion (110) gebildet wird, der relativen Richtung (21a bis 21c), die dem Funktionsargument (116) zugeordneten Winkelbereich entspricht, zugeordnet wird und dass jede Winkelbereichsfunktion (110) für jeweils eines der unterschiedlichen Frequenzbänder (76a bis 76h) in den Spektralbereich transformiert wird, wodurch eine erste Spektralfunktion (95) mit ersten Spektralfunktionsargumenten (128) erhalten wird, und die ersten Spektralfunktionsargumente (128) mittlere Spektralfunktionsargumenten (126), bezüglich denen der Realteil der Spektralfunktion symmetrisch ist, aufweisen und die Spektralfunktion (95) mit weiteren Spektralfunktionsargumenten (130) zwischen den mittleren Spektralfunktionsargumenten (126) durch Einfügen der weiteren Spektralfunktionsargumente (130) aufgefüllt wird, wobei die weiteren Spektralfunktionsargumente (130) jeweils Funktionswerte (116) Null aufweisen, und die aufgefüllte erste Spektralfunktion (95) zu einer ersten interpolierten Winkelbereichsfunktion (106) aus dem Spektralbereich mit einer inversen schnellen Fourier-Transformation rücktransformiert wird.

9. Verfahren nach Anspruch 8, **dadurch gekennzeichnet, dass** die Funktionswerte (116) der ersten Funktionsargumente (114) der Winkelbereichsfunktionen (110) vor dem Transformieren in den Spektralbereich, z.B. durch Digitalisieren, quantisiert werden und jede der Winkelbereichsfunktionen (110) mit einer diskrete Fourier-Transformation in den Spektralbereich transformiert und mit einer inversen diskreten Fourier-Transformation aus dem Spektralbereich zurücktransformiert wird.

10. Verfahren nach Anspruch 8 oder 9, **dadurch gekennzeichnet, dass** jede der Winkelbereichsfunktionen (110) mit kleineren Funktionsargumenten (120), die Winkelbereichen mit kleineren Winkeln als den Winkeln der Winkelbereiche der ersten Funktionsargumente (114) entsprechen, und größeren Funktionsargumenten (123), die Winkelbereichen mit größeren Winkeln als den ersten Winkeln der Winkelbereiche der Funktionsargumente (114) entsprechen, durch Einfügen aufgefüllt wird, wobei die kleineren Funktionsargumente (120) unterhalb des kleinsten Funktionsarguments der ersten Funktionsargumente (114) und die größeren Funktionsargumenten (123) oberhalb des größten Funktionsarguments der ersten Funktionsargumente (114) eingefügt werden, sodass die Gesamtanzahl der Funktionsargumente (114, 120, 123) einer Winkelbereichsfunktion (110) einer Zweierpotenz entspricht, wobei das kleinste Funktionsargument der ersten Funktionsargumente (114) dem Winkelbereich mit den vergleichsweise kleinsten Winkeln der Winkel der den ersten Funktionsargumenten (114) entsprechenden Winkelbereichen entspricht und das größte Funktionsargument der ersten Funktionsargumente (114) dem Winkelbereich mit den vergleichsweise größten Winkeln der Winkel der den ersten Funktionsargumenten (114) entsprechenden Winkelbereichen entspricht.

11. Verfahren nach Anspruch 10, **dadurch gekennzeichnet, dass** die Funktionswerte (116) des kleinsten Funktionsarguments der kleineren Funktionsargumente (120), das dem Winkelbereich mit den vergleichsweise kleinsten Winkeln der Winkel der den kleineren Funktionsargumenten (120) zugeordneten Winkelbereichen entspricht, und des größten Funktionsarguments der größeren Funktionsargumente (123), das dem Winkelbereich mit den vergleichsweise größten Winkeln der Winkel der den größeren Funktionsargumenten (123) zugeordneten Winkelbereichen entspricht, derart gewählt werden, dass diese einen Wert Null aufweisen.

12. Verfahren nach Anspruch 11,
**dadurch gekennzeichnet, dass**
der Steigungsverlauf der Funktionswerte der ersten Funktionsargumente (114), denen jeweils ein Frequenzbandamplitudenwert (78a bis 78h) zugeordnet ist, durch die Funktionswerte (116) der kleineren Funktionsargumente (120) im Bereich (122) des kleinsten Funktionsarguments der ersten Funktionsargumente (114) und durch die Funktionswerte (116) der größeren Funktionsargumente (123) im Bereich (124) des größten Funktionsarguments der ersten Funktionsargumente (114) fortgeführt wird, bevor die Funktionswerte (116) der kleineren Funktionsargumente (120) bis zum kleinsten Funktionsargument der kleineren Funktionsargumente (120) auf einen Wert Null abfallen und bevor der Funktionswert des größten der größeren Funktionsargumente (122) auf einen Funktionswert Null abfällt.

13. Verfahren nach einem der Ansprüche 8 bis 12,
**dadurch gekennzeichnet, dass**
jeweils eine zu einer der ersten Spektralfunktionen (95) identische zweite Spektralfunktion (97) mit der Funktionsvariablen ($j\alpha$) oder der negierten Funktionsvariablen (- $j\alpha$) der zweiten Spektralfunktionen (97) multipliziert, in gleicher Weise wie die identische erste Spektralfunktion (95) mit weiteren Spektralfunktionsargumenten (126) aufgefüllt und zu einer zweiten interpolierten Winkelbereichsfunktion (104) rücktransformiert wird.

14. Verfahren nach einem der Ansprüche 8 bis 13,
**dadurch gekennzeichnet, dass**
jede der ersten interpolierten Winkelbereichsfunktion (106) durch lineare Interpolation mit zusätzlichen weiteren Funktionsargumenten mit interpolierten Funktionswerten (116) aufgefüllt wird, wobei zur linearen Interpolation zwischen die ersten Funktionsargumente (114) bzw. die ersten Funktionsargumente (114) und weitere Funktionsargumente zusätzliche weitere Funktionsargumente eingefügt werden, die interpolierte Funktionswerte aufweisen.

15. Vorrichtung, insbesondere zur Durchführung eines Verfahrens nach einem der Ansprüche 1 bis 14, zur Bestimmung einer oder mehrerer relativer Richtungen (21a bis 21c) als Zielpeilung oder Zielpeilungen, wobei die Vorrichtung derart ausgebildet ist, um Schallwellen (15) mit einer Empfängeranordnung (12) zu empfangen, aus den Schallwellen mittels der Empfängeranordnung (12) Empfangssignale (16a bis 16c) und aus den Empfangssignalen (16a bis 16c) mittels Beamforming Richtungssignale (20a bis 20c) jeweils einer zur Empfängeranordnung (12) relativen Richtung (21a bis 21c) zu ermitteln, die einen zeitlichen Verlauf aufweisen, und aus jedem Richtungssignal (20a bis 20c) ein der relativen Richtung (21a bis 21c) des Richtungssignals (20a bis 20c) zugeordnetes Betragsspektrum (46) bzw. aus dem Betragsspektrum (46) mittels Anwendung mathematischer Funktionen und/oder durch Addition und/oder Multiplikation mit einer Konstanten erhaltenes abgeleitetes Spektrum zu ermitteln,
**dadurch gekennzeichnet, dass**
die Vorrichtung derart ausgebildet ist, um aus dem Frequenzbereich (66) jedes Betragsspektrums (46) bzw. für jedes aus dem Betragsspektrum (46) abgeleiteten Spektrums durch Einteilen des Frequenzbereichs des Betragsspektrums (46) bzw. des aus dem Betragsspektrum (46) abgeleiteten Spektrums Frequenzbänder (76a bis 76h) zu ermitteln, die Amplitudenwerte (71) der in einem der Frequenzbänder (76a bis 76h) auftretenden Frequenzen (68a bis 68j) als ein Frequenzbandamplitudenwert (78a bis 78h) des jeweiligen Frequenzbandes (76a bis 76h) durch Mittelwertbildung oder mittels Addition oder Multiplikation der Amplitudenwerte oder der mit einem Verstärkungsfaktor addierten oder multiplizierten Amplitudenwerte des jeweiligen Frequenzbandes (76a bis 76h) zusammenfassen und die relative Richtung (21a bis 21c), die einem Betragsspektrum (46) bzw. einem aus dem Betragsspektrum (46) abgeleiteten Spektrum zugeordnet ist, als eine Zielpeilung zu bestimmen, wenn das dieser relativen Richtung (21a bis 21c) zugeordnete Betragsspektrum (46) bzw. das aus dem Betragsspektrum abgeleitete Spektrum mindestens eine Anzahl von Frequenzbandamplitudenwerten (78a bis 78h) oberhalb eines Schwellenwertes (31) aufweist, die oberhalb einer festgelegten Detektionsanzahl (33) liegt und somit eine Grenze festlegbar bzw. wählbar ist, ab welcher Bandbreite von einfallenden Schallwellen (15) diese Schallwellen (15) einem potenziellen Ziel zuordenbar sind.

## Claims

1. Method for determining one or more relative directions (21 a to 21 c) as target bearing or target bearings, wherein sound waves (15) are received by a receiver arrangement (12), receiving signals (16a to 16c) are determined from the sound waves (15) by means of the receiver arrangement (12) and directional signals (20a to 20c) of a direction (21 a to 21 c) relative to the receiver arrangement (12) in each case are determined from the receiving signals (16a to 16c) by beamforming, the directional signals having a time progression, and from each directional signal (20a to 20c) a magnitude spectrum (46) assigned to the relative direction (21 a to 21 c) of the directional signal (20a to 20c) or a derived spectrum obtained from the magnitude spectrum (46) by application of mathematical functions and/or by addition and/or multiplication by a constant is determined, **characterised by** that from the frequency range (66) of each magnitude spectrum (46) or of each spectrum derived from the magnitude spectrum (46), frequency bands (76a to 76h) are determined by division of the frequency range of the magnitude spectrum (46) or of the spectrum derived from the magnitude spectrum (46), the amplitude values (71) of the frequencies (68a to 68j) occurring in one of the frequency bands (76a to 76h) are summarised as a frequency band amplitude value (78a to 78h) of the respective frequency band (76a to 76h) by averaging or by addition or multiplication of the amplitude values or of the amplitude values of the respective frequency band (76a to 76h) added or multiplied by an amplification factor and the relative direction (21 a to 21 c), which is assigned to a magnitude spectrum (46) or a spectrum derived from the magnitude spectrum (46), is determined as a target bearing if the magnitude spectrum (46) assigned to this relative direction (21 a to 21 c) or the spectrum derived from the magnitude spectrum (46) has at least a number of frequency band amplitude values (78a to 78h) above a threshold level (31), which number lies above a set detection number (33), and thus a limit is set or selected above which bandwidth of incident sound waves (15) these sound waves (15) are assigned to a potential target.

2. Method according to claim 1, **characterised by** that, in the case that several adjacent relative directions (21 a to 21 c) respectively have a magnitude spectrum (46) or a spectrum derived from the magnitude spectrum (46) with at least a number of frequency band amplitude values (78a to 78h) above the threshold level (31), which number lies above the set detection number (33), only the relative direction (21 a to 21 c) of these adjacent relative directions (21 a to 21 c) that has the biggest number of highest frequency band amplitude values (78a to 78h) of identical frequency bands (76a to 76h) respectively, thus with identical partial frequency ranges, is determined as target bearing.

3. Method according to claim 1 or 2, **characterised by** that the frequency band amplitude values (78a to 78h) of one or more frequency bands (76a to 76h) are masked out in that the frequency band amplitude values (78a to 78h) of the frequency bands (76a to 76h) to be masked out are set to a level below the set threshold level (31), wherein for this one or more partial frequency ranges are established and all frequency band amplitude values (78a to 78h) of the frequency bands (76a to 76h) are set or fixed at a level that lies below the set threshold level (31).

4. Method according to one of the preceding claims, **characterised by** that the receiving signals (16a to 16c) for determining the directional signals (20a to 20c) are each frequency-converted by a frequency converter (36) to a lower band, the frequency-converted receiving signals (16a to 16c) are each low-pass-filtered by a low-pass filter (38), the low-pass-filtered frequency-converted receiving signals (16a to 16c) are each digitised by an analog/digital converter (40) and the digitised, low-pass-filtered frequency-converted receiving signals (16a to 16c) are each added to one another offset in time by a time delay addition unit (42).

5. Method according to one of the preceding claims, **characterised by** that to determine a magnitude spectrum (46) assigned to a relative direction (21 a to 21 c) or spectrum derived from the magnitude spectrum (46), the directional signal (20a to 20c) of the respective relative direction (21 a to 21 c), which has a time progression, is divided chronologically into time windows (60a to 60c) each of the same duration (59) of a time range (58a to 58c) respectively of the directional signal (20a to 20c).

6. Method according to claim 5, **characterised by** that the magnitude spectra (46) or the spectra derived from the magnitude spectra (46) and their frequency band amplitude values (78a to 78h) with a fixed repetition frequency are determined anew from the time windows (60a to 60c) of the same respective current time range (58a to 58c) for each of the relative directions (21 a to 21 c).

7. Method according to one of the preceding claims, **characterised by** that a matrix (80) is formed with elements (86) which are assigned respectively to a line of the matrix (80) and a column of the matrix (80), wherein each line is assigned a frequency band (76a to 76h) and each column is assigned a relative direction (21 a to 21 c) or each column is assigned a frequency band (76a to 76h) and each line is assigned a relative direction (21 a to 21 c) and adjacent frequency bands (76a to 76h) are assigned to adjacent lines or columns and adjacent relative directions (21 a to 21 c) are assigned to adjacent columns or lines, due to which each element (86) of the matrix (80) is assigned a frequency band (76a to 76h) and a relative direction (78a to 78h) and the frequency band amplitude value (78a to 78h) of the frequency band (76a to 76h) assigned to the element (86) of the relative direction (21 a to 21 c) assigned to the element (86) is entered in each element (86) or this frequency band amplitude value (76a to 76h) is represented in this element (86).

8. Method according to one of the preceding claims, **characterised by** that each of the relative directions (21 a to 21 c) corresponds to an angular range in each case and for each of the frequency bands (76a to 76h) an angular range function (110) is formed with first function arguments (114) in that an angular range of a relative direction (21 a to 21 c) is allocated to each first function argument (114), wherein the first function arguments (114) of the angular range function (110) then each correspond to an angular range and the frequency band amplitude value (78a to 78h) of the frequency band (76a to 76h), for which the respective angular range function (110) is formed, of the relative direction (21 a to 21 c) that corresponds to the angular range assigned to the function argument (116) is assigned to each of the first function arguments (114) as a function value and that each angular range function (110) is transformed for one of the different frequency bands (76a to 76h) respectively into the spectral range, due to which a first spectral function (95) with first spectral function arguments (128) is obtained, and the first spectral function arguments (128) have central spectral function arguments (126), with reference to which the real part of the spectral function is symmetrical, and the spectral function (95) is filled in with other spectral function arguments (130) between the central spectral function arguments (126) by insertion of the other spectral function arguments (130), wherein the other spectral function arguments (130) have respectively function values (116) zero, and the filled-in first spectral function (95) is transformed back into a first interpolated angular range function (106) from the spectral range with an inverse fast Fourier transformation.

9. Method according to claim 8, **characterised by** that the function values (116) of the first function arguments (114) of the angular range functions (110) are quantised prior to transformation into the spectral range, e.g. by digitising, and each of the angular range functions (110) is transformed by a discrete Fourier transformation into the spectral range and transformed back from the spectral range by an inverse discrete Fourier transformation.

10. Method according to claim 8 or 9, **characterised by** that each of the angular range functions (110) with smaller function arguments (120), which correspond to angular ranges with smaller angles than the angles of the angular ranges of the first function arguments (114), and bigger function arguments (123), which correspond to angular ranges with bigger angles than the first angles of the angular ranges of the function arguments (114), are filled in by insertion, wherein the smaller function arguments (120) are inserted below the smallest function argument of the first function arguments (114) and the bigger function arguments (123) are inserted above the biggest function arguments of the first function arguments (114), so that the total number of function arguments (114, 120, 123) of an angular range function (110) corresponds to a power of two, wherein the smallest function argument of the first function arguments (114) corresponds to the angular range with the comparatively smallest angles of the angles of the angular ranges corresponding to the first function arguments (114) and the biggest function argument of the first function arguments (114) corresponds to the angular range with the comparatively biggest angles of the angles of the angular ranges corresponding to the first function arguments (114).

11. Method according to claim 10, **characterised by** that the function values (116) of the smallest function argument of the smaller function arguments (120), which argument corresponds to the angular range with the comparatively smallest angles of the angles of the angular ranges assigned to the smaller function arguments (120), and of the biggest function argument of the bigger function arguments (123), which argument corresponds to the angular range with the comparatively biggest angles of the angles of the angular ranges assigned to the bigger function arguments (123), are chosen in such a way that these have a zero value.

12. Method according to claim 11, **characterised by** that the gradient of the function values of the first function arguments (114), to which a frequency band amplitude value (78a to 78h) is assigned respectively, is continued by the function values (116) of the smaller function arguments (120) in the area (122) of the smallest function argument of the first function arguments (1140 and by the function values (116) of the bigger function arguments (123) in the area (124) of the biggest function arguments of the first function arguments (114) before the function values (116) of the smaller function arguments (120) down to the smallest function argument of the smaller function arguments (120) fall to a value zero and before the function value of the biggest of the bigger function arguments (122) falls to a function value zero.

13. Method according to one of claims 8 to 12, **characterised by** that a second spectral function (97), identical to one of the first spectral functions (95), is multiplied by the function variables (*yes*) or the negated function variables *(- yes)* of the second spectral functions (97), filled with other spectral function arguments (126) in the same manner as the identical first spectral function (95) and transformed back to a second interpolated angular range function (104).

14. Method according to one of claims 8 to 13, **characterised by** that each of the first interpolated angular range functions (106) is filled by linear interpolation with additional other function arguments with interpolated function values (116), wherein for linear interpolation between the first function arguments (114) or the first function arguments (114) and other function arguments, additional other function arguments are inserted that have interpolated function values.

15. Device, in particular for executing a method according to one of claims 1 to 14, for determining one or more relative directions (21 a to 21 c) as target bearing or target bearings, wherein the device is formed in such a way as to receive sound waves (15) with a receiver arrangement (12), to determine receiving signals (16a to 16c) from the sound waves (15) by means of the receiver arrangement (12) and directional signals (20a to 20c) of a direction (21 a to 21 c) relative to the receiver arrangement (12) in each case from the receiving signals (16a to 16c) by beamforming, which directional signals have a time progression, and from each directional signal (20a to 20c) to determine a magnitude spectrum (46) assigned to the relative direction (21 a to 21 c) of the directional signal (20a to 20c) or a derived spectrum obtained from the magnitude spectrum (46) by application of mathematical functions and/or by addition and/or multiplication by a constant, **characterised by** that the device is formed in such a way as to determine frequency bands (76a to 76h) from the frequency range (66) of each magnitude spectrum (46) or for each spectrum derived from the magnitude spectrum (46) by division of the frequency range of the magnitude spectrum (46) or of the spectrum derived from the magnitude spectrum (46), to summarise the amplitude values (71) of the frequencies (68a to 68j) occurring in one of the frequency bands (76a to 76h) as a frequency band amplitude value (78a to 78h) of the respective frequency band (76a to 76h) by averaging or by addition or multiplication of the amplitude values or of the amplitude values added or multiplied by an amplification factor of the respective frequency band (76a to 76h) and to determine the relative direction (21 a to 21 c), which is assigned to a magnitude spectrum (46) or a spectrum derived from the magnitude spectrum (46), as a target bearing if the magnitude spectrum (46) assigned to this relative direction (21 a to 21 c) or the spectrum derived from the magnitude spectrum (46) has at least a number of frequency band amplitude values (78a to 78h) above a threshold level (31), which number lies above a set detection number (33) and thus a limit can be set or selected above which bandwidth of incident sound waves (15) these sound waves (15) can be assigned to a potential target.

## Revendications

1. Procédé de détermination d'une ou plusieurs directions relatives (21 a à 21 c) comme relèvement de cible ou relèvements de cible, dans lequel des ondes sonores (15) sont reçues par un agencement de récepteurs (12), des signaux de réception (16a à 16c) sont déterminés à partir des ondes sonores (15) au moyen de l'agencement de récepteurs (12) et des signaux de direction (20a à 20c) respectivement d'une direction (21 a à 21 c) relative à l'agencement de récepteurs (12) sont déterminés à partir des signaux de réception (16a à 16c) au moyen du beamforming, les signaux de direction présentant une variation temporelle, et, à partir de chaque signal de direction (20a à 20c), un spectre d'amplitude (46) associé à la direction relative (21a à 21c) du signal de direction (20a à 20c) ou un spectre dérivé du spectre d'amplitude (46) obtenu en appliquant des fonctions mathématiques et/ou par l'addition à et/ou la multiplication avec une constante est déterminé, **caractérisé en ce que** à partir de la gamme de fréquence (66) de chaque spectre d'amplitude (46) ou de chaque spectre dérivé du spectre d'amplitude (46), des bandes de fréquence (76a à 76h) sont déterminées en répartissant la gamme de fréquence du spectre d'amplitude (46) ou du spectre dérivé du spectre d'amplitude (46), les valeurs d'amplitude (71) des fréquences (68a à 68j) présentes dans une des bandes de fréquence (76a à 76h) sont groupées comme valeur d'amplitude de bande de fréquence (78a à 78h) de la bande de fréquence (76a à 76h) respective par détermination d'une moyenne ou au moyen de l'addition ou de la multiplication des valeurs d'amplitude, ou des valeurs d'amplitude ajoutées à ou multipliées par un facteur d'amplification, de la bande de fréquence (76a à 76h) respective et la direction relative (21 a à 21 c), qui est associée à un spectre d'amplitude (46) ou à un spectre dérivé du spectre d'amplitude (46), est déterminée comme un relèvement de cible, quand le spectre d'amplitude (46) associé à cette direction relative (21 a à 21 c) ou le spectre dérivé du spectre d'amplitude (46) comporte au moins un nombre de valeurs d'amplitude de bande de fréquence (78a à 78h) supérieures à une valeur seuil (31), qui est supérieur à un nombre de détection (33) défini, et qu'une limite est ainsi définie ou sélectionnée pour la largeur de bande d'ondes sonores (15) incidentes à partir de laquelle ces ondes sonores (15) sont associées à une cible potentielle.

2. Procédé selon la revendication 1, **caractérisé en ce que** dans le cas où plusieurs directions relatives (21 a à 21 c) voisines comportent chacune un spectre d'amplitude (46) ou un spectre dérivé du spectre d'amplitude (46) avec au moins un nombre de valeurs d'amplitude de bande de fréquence (78a à 78h) supérieures à la valeur seuil (31), qui est supérieur au nombre de détection (33) défini, seule la direction relative (21 a à 21 c) de ces directions relatives (21 a à 21 c) voisines qui comporte le plus grand nombre de valeurs d'amplitude de bande de fréquence (78a à 78h) les plus élevées respectivement des mêmes bandes de fréquence (76a à 76h), c'est-à-dire avec les mêmes gammes de fréquence partielles, de ces directions relatives (21 a à 21 c) voisines, est déterminée comme relèvement de cible.

3. Procédé selon la revendication 1 ou 2,
**caractérisé en ce que**
les valeurs d'amplitude de bande de fréquence (78a à 78h) d'une ou plusieurs bandes de fréquence (76a à 76h) sont masquées, en définissant les valeurs d'amplitude de bande de fréquence (78a à 78h) des bandes de fréquence (76a à 76h) à masquer à une valeur inférieure à la valeur seuil (31) définie, une ou plusieurs gammes de fréquence partielles étant définies à cet effet et toutes les valeurs d'amplitude de bande de fréquence (78a à 78h) des bandes de fréquence (76a à 76h) étant définies ou fixées à une valeur inférieure à la valeur seuil (31) définie.

4. Procédé selon l'une des revendications précédentes,
**caractérisé en ce que**
les signaux de réception (16a à 16c) sont transposés en fréquence dans une bande plus basse respectivement au moyen d'un changeur de fréquence (36) pour déterminer les signaux de direction (20a à 20c), les signaux de réception (16a à 16c) transposés en fréquence sont filtrés respectivement par un filtre passe-bas (38), les signaux de réception (16a à 16c) transposés en fréquence et filtrés par filtre passe-bas sont numérisés respectivement au moyen d'un convertisseur analogique-digital (40) et les signaux de réception (16a à 16c) transposés en fréquence, filtrés par filtre passe-bas et numérisés sont ajoutés respectivement les uns aux autres de manière décalée dans le temps au moyen d'une unité d'addition à temporisation (42).

5. Procédé selon l'une des revendications précédentes,
**caractérisé en ce que**
pour déterminer un spectre d'amplitude (46) ou un spectre dérivé du spectre d'amplitude (46) associé à une direction relative (21 a à 21 c), le signal de direction (20a à 20c) de la direction relative (21 a à 21 c) respective, qui présente une variation temporelle, est divisé chronologiquement en fenêtres temporelles (60a à 60c) chacune de la même durée (59) respectivement d'un domaine temporel (58a à 58c) du signal de direction (20a à 20c).

6. Procédé selon la revendication 5,
**caractérisé en ce que**
les spectres d'amplitude (46) ou les spectres dérivés des spectres d'amplitude (46) ainsi que leurs valeurs d'amplitude de bande de fréquence (78a à 78h) sont déterminés une nouvelle fois pour chacune des directions relatives (21 a à 21 c) à partir des fenêtres temporelles (60a à 60c) du même domaine temporel (58a à 58c) actuel respectif avec une cadence de répétition définie.

7. Procédé selon l'une des revendications précédentes,
**caractérisé en ce que**
une matrice (80) avec des éléments (86), qui sont associés respectivement à une ligne de la matrice (80) et à une colonne de la matrice (80), est formée, une bande de fréquence (76a à 76h) étant associée à chaque ligne et une direction relative (21 a à 21 c) à chaque colonne ou une bande de fréquence (76a à 76h) étant associée à chaque colonne et une direction relative (21 a à 21 c) à chaque ligne et des bandes de fréquence (76a à 76h) voisines étant associées à des lignes ou des colonnes voisines et des directions relatives (21 a à 21 c) voisines étant associées à des colonnes ou des lignes voisines, ce par quoi une bande de fréquence (76a à 76h) et une direction relative (21 a à 21 c) sont associées à chaque élément (86) de la matrice (80) et, dans chaque élément (86), la valeur d'amplitude de bande de fréquence (78a à 78h) de la bande de fréquence (76a à 76h) associée à l'élément (86) de la direction relative (21 a à 21 c) associée à l'élément (86) est inscrite ou cette valeur d'amplitude de bande de fréquence (76a à 76h) est représentée dans cet élément (86).

8. Procédé selon l'une des revendications précédentes,
**caractérisé en ce que**
chacune des directions relatives (21 a à 21 c) correspond respectivement à une plage angulaire et une fonction de plage angulaire (110) avec des premiers arguments de fonction (114) est formée pour chacune des bandes de fréquence (76a à 76h), en attribuant une plage angulaire d'une direction relative (21 a à 21 c) à chaque premier argument de fonction (114), dans lequel les premiers arguments de fonction (114) de la fonction de plage angulaire (110) correspondent alors respectivement à une plage angulaire, et la valeur d'amplitude de bande de fréquence (78a à 78h) de la bande de fréquence (76a à 76h), pour laquelle la fonction de plage angulaire (110) respective est formée, de la direction relative (21 a à 21 c), qui correspond à la plage angulaire associée à l'argument de fonction (116), est associée respectivement à chacun des premiers arguments de fonction (114) comme valeur de la fonction (116), et **en ce que** chaque fonction de plage angulaire (110) pour respectivement une des différentes bandes de fréquence (76a à 76h) est transformée dans le domaine spectral, ce par quoi une première fonction spectrale (95) avec des premiers arguments de fonction spectrale (128) est obtenue, et les premiers arguments de fonction spectrale (128) comportent des arguments de fonction spectrale (126) médians, par rapport auxquels la partie réelle de la fonction spectrale est symétrique, et la fonction spectrale (95) est remplie d'autres arguments de fonction spectrale (130) entre les arguments de fonction spectrale (126) médians en insérant les autres arguments de fonction spectrale (130), dans lequel les autres arguments de fonction spectrale (130) comportent respectivement des valeurs de fonction (116) de zéro, et la première fonction spectrale (95) remplie est retransformée depuis le domaine spectral en une première fonction de plage angulaire (106) interpolée à l'aide d'une transformation de Fourier rapide inverse.

9. Procédé selon la revendication 8,
**caractérisé en ce que**
les valeurs de fonction (116) des premiers arguments de fonction (114) des fonctions de plage angulaire (110) sont quantifiées avant la transformation dans le domaine spectral, par exemple par numérisation, et chacune des fonctions de plage angulaire (110) est transformée dans le domaine spectral à l'aide d'une transformation de Fourier discrète et retransformée depuis le domaine spectral à l'aide d'une transformation de Fourier discrète inverse.

10. Procédé selon la revendication 8 ou 9,
**caractérisé en ce que**
chacune des fonctions de plage angulaire (110) est remplie d'arguments de fonction plus petits (120), qui correspondent à des plages angulaires avec des angles plus petits que les angles des plages angulaires des premiers arguments de fonction (114), et d'arguments de fonction plus grands (123), qui correspondent à des plages angulaires avec des angles plus grands que les premiers angles des plages angulaires des arguments de fonction (114), par insertion, les arguments de fonction plus petits (120) étant insérés sous l'argument de fonction le plus petit des premiers arguments de fonction (114) et les arguments de fonction plus grands (123) au-dessus de l'argument de fonction le plus grand des premiers arguments de fonction (114), de telle sorte que le nombre total des arguments de fonction (114, 120, 123) d'une fonction de plage angulaire (110) correspond à une puissance de deux, dans lequel le plus petit argument de fonction des premiers arguments de fonction (114) correspond à la plage angulaire avec les angles comparativement les plus petits des angles des plages angulaires correspondant aux premiers arguments de fonction (114) et l'argument de fonction le plus grand des premiers arguments de fonction (114) correspond à la plage angulaire avec les angles comparativement les plus grands des angles des plages angulaires correspondant aux premiers arguments de fonction (114).

11. Procédé selon la revendication 10,
**caractérisé en ce que**
les valeurs de fonction (116) du plus petit argument de fonction des arguments de fonction plus petits (120), qui correspond à la plage angulaire avec les angles comparativement les plus petits des angles des plages angulaires associées aux arguments de fonction plus petits (120), et du plus grand argument de fonction des arguments de fonction plus grands (123), qui correspond à la plage angulaire avec les angles comparativement les plus grands des angles des plages angulaires associées aux arguments de fonction plus grands (123), sont choisies de telle manière qu'elles présentent une valeur de zéro.

12. Procédé selon la revendication 11,
**caractérisé en ce que**
la pente des valeurs de fonction des premiers arguments de fonction (114), auxquels est associée respectivement une valeur d'amplitude de bande de fréquence (78a à 78h), est prolongée par les valeurs de fonction (116) des arguments de fonction plus petits (120) dans la zone (122) du plus petit argument de fonction des premiers arguments de fonction (114) et par les valeurs de fonction (116) des arguments de fonction plus grands (123) dans la zone (124) du plus grand argument de fonction des premiers arguments de fonction (114), avant que les valeurs de fonction (116) des arguments de fonction plus petits (120) jusqu'au plus petit argument de fonction des arguments de fonction plus petits (120) ne descendent à une valeur de zéro et avant que la valeur de fonction du plus grand des arguments de fonction plus grands (122) ne descende à une valeur de fonction de zéro.

13. Procédé selon l'une des revendications 8 à 12,
**caractérisé en ce que**
respectivement une seconde fonction spectrale (97) identique à l'une des premières fonctions spectrales (95) est multipliée par la variable de fonction ($j\alpha$) ou la variable de fonction mise à la négative ($-j\alpha$) des secondes fonctions spectrales (97), et elle est remplie d'autres arguments de fonction spectrale (126) et retransformée en une seconde fonction de plage angulaire (104) interpolée de la même manière que la première fonction spectrale (95) identique.

14. Procédé selon l'une des revendications 8 à 13,
**caractérisé en ce que**
chacune des premières fonctions de plage angulaire interpolées (106) est remplie par interpolation linéaire d'autres arguments de fonction supplémentaires avec des valeurs de fonction (116) interpolées, dans lequel, pour l'interpolation linéaire, d'autres arguments de fonction supplémentaires sont insérés entre les premiers arguments de fonction (114) ou les premiers arguments de fonction (114) et d'autres arguments de fonction, ces autres arguments de fonction supplémentaires comportant des valeurs de fonction interpolées.

15. Dispositif, en particulier destiné à exécuter un procédé selon l'une des revendications 1 à 14, destiné à déterminer une ou plusieurs directions relatives (21 a à 21 c) comme relèvement de cible ou relèvements de cible, dans lequel le dispositif est conçu de manière à recevoir des ondes sonores (15) par un agencement de récepteurs (12), déterminer des signaux de réception (16a à 16c) à partir des ondes sonores au moyen de l'agencement de récepteurs (12) et des signaux de direction (20a à 20c) respectivement d'une direction (21 a à 21 c) relative à l'agencement de récepteurs (12) à partir des signaux de réception (16a à 16c) au moyen du beamforming, les signaux de direction présentant une variation temporelle, et, à partir de chaque signal de direction (20a à 20c), déterminer un spectre d'amplitude (46) associé à la direction relative (21 a à 21 c) du signal de direction (20a à 20c) ou un spectre dérivé du spectre d'amplitude (46) obtenu en appliquant des fonctions mathématiques et/ou par l'addition à et/ou la multiplication avec une constante, **caractérisé en ce que** le dispositif est conçu de manière à, à partir de la gamme de fréquence (66) de chaque spectre d'amplitude (46) ou pour chaque spectre dérivé du spectre d'amplitude (46), déterminer des bandes de fréquence (76a à 76h) en répartissant la gamme de fréquence du spectre d'amplitude (46) ou du spectre dérivé du spectre d'amplitude (46), grouper les valeurs d'amplitude (71) des fréquences (68a à 68j) présentes dans une des bandes de fréquence (76a à 76h) comme valeur d'amplitude de bande de fréquence (78a à 78h) de la bande de fréquence (76a à 76h) respective par détermination d'une moyenne ou au moyen de l'addition ou de la multiplication des valeurs d'amplitude, ou des valeurs d'amplitude ajoutées à ou multipliées par un facteur d'amplification, de la bande de fréquence (76a à 76h) respective, et déterminer la direction relative (21a à 21 c), qui est associée à un spectre d'amplitude (46) ou à un spectre dérivé du spectre d'amplitude (46), comme un relèvement de cible, quand le spectre d'amplitude (46) associé à cette direction relative (21 a à 21 c) ou le spectre dérivé du spectre d'amplitude comporte au moins un nombre de valeurs d'amplitude de bande de fréquence (78a à 78h) supérieures à une valeur seuil (31), qui est supérieur à un nombre de détection (33) défini et qu'une limite peut ainsi être définie ou sélectionnée pour la largeur de bande d'ondes acoustiques (15) incidentes à partir de laquelle ces ondes acoustiques (15) sont associées à une cible potentielle.

_Fig. 1_

_Fig. 2_

_Fig. 3_

*Fig. 4a*

*Fig. 4b*

*Fig. 5*

*Fig. 6*

*Fig. 7*

*Fig. 8*

*Fig. 9*

*Fig. 10*

*Fig. 11*

*Fig. 12*

*Fig. 13*

*Fig. 14a*

*Fig. 14b*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3531230 A1
- DE 4130699 A1
- DE 3832678